# EUROPÄISCHE PATENTSCHRIFT

(11) **EP 3 558 052 B1**
(45) Veröffentlichungstag und Bekanntmachung des Hinweises auf die Patenterteilung: **07.02.2024**
(21) Anmeldenummer: 17832924.9
(22) Anmeldetag: 12.12.2017
(51) Int. Cl.: A45D 44/00, G01J 3/46, G01J 3/52

(54) **KAMERA ZUR HAARANALYSE MIT KALIBIERVORRICHTUNG**
CAMERA WITH CALIBRATION DEVICE FOR HAIR ANALYSIS
CAMÉRA SERVANT À L'ANALYSE DES CHEVEUX COMPRENANT UN DISPOSITIF D'ÉTALONNAGE

(30) Priorität: 20.12.2016 DE 102016225656
(43) Veröffentlichungstag der Anmeldung: 30.10.2019
(73) Patentinhaber: Henkel AG & Co. KGaA, 40589 Düsseldorf (DE)
(72) Erfinder: METTEN, Diane, 22393 Hamburg (DE); KNAPPE, Thorsten, 22869 Schenefeld (DE); PULS, Anna, 21423 Winsen (Luhe) (DE); BAYERSDÖRFER, Rolf, 22589 Hamburg (DE); ROSCHER, Katharina, 22765 Hamburg (DE)
(86) Internationale Anmeldenummer: PCT/EP2017/082323
(87) Internationale Veröffentlichungsnummer: WO 2018/114446

(56) Entgegenhaltungen:
- WO-A1-2016/193018
- US-A1- 2008 260 243
- US-A1- 2014 118 521
- US-B2- 7 489 816

## Beschreibung

Die Erfindung betrifft ein Kalibrierverfahren und ein Kalibriermittel zum Kalibrieren einer Kamera sowie ein Verfahren und ein System zum Ermitteln nutzerbasierender Haarfarbinformation.

Für Personen, die sich mit der Thematik des Haarfärbens auseinandersetzen, ist es von hoher Relevanz, zu erfahren, welche Haarfarbe die eigenen Haare vor einem Haarfärbevorgang aufweisen und in welchem Zustand sich die eigenen Haare vor dem Haarfärbvorgang befinden. Diese Information ist relevant, um beispielsweise ein Haarfärbemittel oder ein Pflegeprodukt gezielt auswählen zu können. Nutzer, d.h. Personen, die Interesse zeigen, sich die Haare zu färben, oder die ein Haarfärben ihrer Haare bereits durchgeführt haben, stehen oft vor der schwierigen Entscheidung, festzulegen, welches Haarfärbmittel das geeignetste für ihren individuellen Haarfarbtyp ist und sind dabei meist überfordert.

Bei einer telefonischen Beratung bezüglich einer Haarfarbe oder eines Haarfärbeproduktes besteht oft das Problem, wie die eigene Haarfarbe dem Gesprächspartner beispielsweise über das Telefon beschrieben werden kann. Ein Dritter fasst eine ihm beschriebene Haarfarbe meist unterschiedlich und subjektiv auf.

Ferner besteht beim Nutzer von Haarfärbemittel ein Interesse daran, herauszufinden, welche Accessoires, beispielsweise Schmuck oder Kleider, zu einer möglicherweise ausgewählten neuen Haarfarbe besonders gut passen.

Herkömmlicherweise wählt der Nutzer eines Haarfärbemittels, welches er beispielsweise im Drogeriemarkt kauft, nach der auf der Packung eines Haarfärbeproduktes abgebildeten Zielhaarfarbe aus. Darüber hinaus kann eine Person durch einen Friseur aufgrund eines subjektiven Eindrucks des Friseurs beraten werden, wobei der Friseur und die Person bereits unterschiedliche Auffassungen von der Haarfarbe der Person haben können.

Der Nutzer kann seine Haare vor dem Färbevorgang an eine dem Haarfärbemittel beiliegende Farbpalette halten und so einen ersten Eindruck erhalten, welche Haarfarbe im Idealfall seine Haare haben werden. Die Farbpalette gibt ihm, ausgehend von Musterhaarfarben, einen Hinweis zu der sich nach Färbung einstellenden Zielhaarfarbe. Bei herkömmlichen zu kaufenden Haarfärbeprodukten wird oft der gesamte Entwickler zum Färbemittel zugegeben, so dass ein individuelles Mischverhältnis nicht vorgesehen ist.

Ferner muss der Nutzer, wenn er seine aktuelle Haarfarbe ermitteln möchte, stets eine Farbpalette mitführen, d.h. er muss die oftmals unhandliche Farbpalette zum Vergleich seiner Haarfarbe mit den auf der Farbpalette abgebildeten Haarfarbe stets bei sich haben. Dabei kann es vorkommen, dass der Nutzer die Farbpalette vergisst oder die Farbpalette verloren geht. Herkömmliche Farbpaletten weisen oft eine grobe Einteilung der Haarfarben ein, sodass es vorkommen kann, dass die Haarfarbe des Nutzers nicht auf der Farbpalette zu finden ist.

Auch ist der vom Nutzer wahrgenommene Farbton der Haare einerseits von der aktuellen Beleuchtung abhängig und andererseits ist dieser Farbeindruck vom Verbraucher nicht in objektiver Weise kommunizierbar.

Unter einer "Farbe" kann hierin ein Zusammenwirken eines Farbtons (d.h. eines spektralen Farbeindrucks, auch als Buntton bezeichnet, was als das verstanden werden kann, was als die "eigentliche Farbe" angesehen wird), einer Farbintensität (d.h. wie intensiv die Farbe erscheint, z.B. verglichen mit einem neutralen Grau, was auch als Sättigung, Farbsättigung, Buntheit, Chromatizität oder Farbtiefe bezeichnet wird) und einer Helligkeit (d.h. wie hell oder dunkel die Farbe erscheint) verstanden werden.

Unter dem Begriff "Farbton" kann hierin der spektrale Farbeindruck einer Farbe verstanden werden, unabhängig davon, wie dieser parametrisiert sein kann, beispielsweise als ein Punkt in einem zweidimensionalen Farbraum (z.B. a*b* des L*a*b*-Systems) oder ein Verhältnis von Farbanteilen (wie z.B. beim RGB-Farbraum oder beim CMYK-Farbraum).

Auch fällt die Selbsteinschätzung der eigenen Haarfarbe nicht jedem leicht und ein erheblicher Anteil von Personen schätzt den Farbton seiner Haare falsch ein, oft heller ein als er tatsächlich ist. Dies kann beispielsweise auch zu Problemen führen, wenn der Nutzer eine Farbtonangabe in einem Bestellformular zum Bestellen eines Haarfärbemittels beschreiben soll. So hat jede Person bei Bezeichnungen von Haarfarben mittels beispielsweise den Begriffen "hellbraun", "dunkelbraun", "blond", "dunkelblond" usw. unterschiedliche Vorstellungen von Haarfarben.

Somit ist festzustellen, dass die aus einer herkömmlichen Farbanalyse abgeleiteten Handlungen, beispielsweise die genaue Zusammensetzung einer Haarfärbemischung, der auf die Haare abgestimmte Farbton eines dekorativen Kosmetikums oder der auf die Haarfarbe abgestimmte Farbton eines Schmuck- oder Kleidungsstücks aufgrund der fehlerhaften Ausgangshaarfarbanalyse für den Nutzer im Ergebnis nicht zufriedenstellend ist. Die Druckschrift US2008260243 offenbart ein Verfahren zur Haarfarbenanalyse unter Verwendung einer Kamera und Kalibriermittel.

Eine Entscheidung für ein Haarfärbemittel könnte erleichtert werden, indem eine akkurate Bestimmung der Ausgangshaarfarbe des Nutzers in schneller und wiederholbarer Weise durchführbar wäre. Ferner ist wünschenswert, dass der Nutzer nicht stets eine externe Farbpalette mitzuführen hat, wenn seine Haarfarbe beispielsweise an verschiedenen Orten, beispielsweise zuhause, beim Friseur oder im Urlaub, ermittelt werden soll. Ferner wäre eine präzise Angabe über die Haarfarbe bezüglich des optimalen individuellen Abmischens der Färbemischung insbesondere in Hinblick auf die Art der Farbstoffe oder deren Menge wünschenswert.

Somit besteht Bedarf an einem Verfahren und einem System, welche es vorsehen, schnell, zuverlässig und mit einem geringen Aufwand, eine exakte Ausgangshaarfarbe zu ermitteln. Die vom Verfahren oder System bereitgestellte präzise Angabe über die Ausgangshaarfarbe kann dann die Grundlage für eine Mehrzahl von auf den jeweiligen Nutzer abgestimmten Informationen hinsichtlich seiner gewünschten Zielhaarfarbe sein.

In verschiedenen Ausführungsbeispielen wird ein Verfahren bereitgestellt, mit dem eine aktuelle Haarfarbe nicht subjektiv sondern objektiv erfasst werden kann. Insbesondere ist eine präzise Bestimmung der aktuellen Haarfarbe erwünscht, bei der der Einfluss der Lichtverhältnisse zum Zeitpunkt der Messung einer Haarfarbe eines Nutzers minimiert werden soll.

In verschiedenen Ausführungsbeispielen kann ein Schädigungsgrad von Haaren des Nutzers ermittelt werden.

In verschiedenen Ausführungsbeispielen kann neben der genauen Erfassung der Haarfarbe ein Grauanteil der Haare mittels einer Kamera erfasst werden.

In verschiedenen Ausführungsbeispielen können nach der Ermittlung der exakten Haarfarbe dem Nutzer nutzerbasierte Informationen bereitgestellt werden, um ein besseres Haarfärbergebnis zu erzielen und damit die Zufriedenheit des Nutzers zu erhöhen.

In verschiedenen Ausführungsbeispielen kann nach der Ermittlung der exakten Haarfarbe dem Nutzer Information präsentiert werden, die ihn bei der Wahl passenden Accessoires wie beispielsweise Schmuck oder Kleidung zu seiner Haarfarbe berät.

Das oben Beschriebene kann jeweils mit den Merkmalen der unabhängigen Ansprüche erreicht werden. Weitere vorteilhafte Ausführungsbeispiele können den Unteransprüchen und der folgenden Beschreibung der Ausführungsformen entnommen werden.

Erfindungsgemäß ist ein Verfahren zum Kalibrieren einer Kamera vorgesehen, wie im Anspruch 1 definiert, das ein Aufnehmen eines digitalen Bildes von mindestens einer Kalibrierinformation auf mindestens einer Faser einer Mehrzahl von Fasern aus Naturhaar oder naturhaarähnlichen Fasern mittels einer Kamera, ein Ermitteln der mindestens einen Faser im digitalen Bild mittels mindestens eines Markers, ein Ermitteln einer Mehrzahl von Farbwerten einer Mehrzahl von Referenzfarben als die Kalibrierinformation auf der mindestens einen Faser im digitalen Bild, wobei jeder Referenzfarbe ein Referenzfarbwert zugeordnet ist, und ein Zuordnen des jeweiligen ermittelten Farbwertes der Mehrzahl von ermittelten Farbwerten zu dem jeweiligen zugeordneten Referenzfarbwert der Mehrzahl von Referenzfarbwerten, wobei die mindestens eine Faser zwei Marker aufweist, die einen nicht natürlichen Farbverlauf aufweisen und wobei ein Bereich zwischen den zwei Markern vorgesehen ist, der Information hinsichtlich dreier Referenzfarben aufweist.

In verschiedenen Ausführungsbeispielen kann auf vorteilhafte Weise erreicht werden, dass der Störfaktor der Abhängigkeit von Lichtverhältnissen zum Zeitpunkt der Aufnahme eines digitalen Bildes von Haar minimiert wird. Das Problem besteht darin, dass abhängig von den jeweiligen Lichtverhältnissen bei der Bestimmung einer Haarfarbe eines Nutzers die Haare anders eingeschätzt werden, weil die Haarfarbe abhängig von den zum Zeitpunkt der Aufnahme herrschenden Lichtverhältnissen variieren kann.

Vorgesehen ist ein Kalibrierverfahren, mittels dessen es möglich ist, eine Kamera auf bestimmte Referenzfarbwerte einzustellen. Die Kamera kann Farben von Referenzstrukturen auf einem Kalibriermittel erfassen. Eine Referenzstruktur auf einem Kalibriermittel kann eine Mehrzahl von Referenzfarben aufweisen, denen jeweils Referenzfarbwerte zugeordnet sein können. Nach der Messung der Haarfarbe eines Nutzers mittels der Kamera kann der ermittelte Haarfarbwert mit einer ermittelten Referenzfarbe verknüpft werden. Es kann dann der zugehörige Referenzfarbwert zu der Referenzfarbe ermittelt werden. So kann durch Auswählen des zu einer Referenzfarbe dazugehörigen Referenzfarbwertes die aktuelle Haarfarbe eines Nutzers weitgehend ohne den Einfluss der aktuellen Lichtverhältnisse bestimmt werden.

Im Detail kann mittels der Kamera beispielsweise eine erster Farbwert 1 einer Referenzfarbe 1 auf dem Kalibriermittel, ein zweiter Farbwert 2 einer zweiten Referenzfarbe 2 auf dem Kalibriermittel und ein dritter Farbwert 3 einer dritten Referenzfarbe 3 auf dem Kalibriermittel aufgenommen werden und diese drei Farbwerte 1, 2, 3 beispielsweise gespeichert werden. Nachdem bekannt ist, dass der Farbwert 1 einem definierten Farbreferenzwert 1 zugeordnet ist, dass der Farbwert 2 einem definierten Farbreferenzwert 2 zugeordnet ist, und, dass der Farbwert 3 einem definierten Farbreferenzwert 3 zugeordnet ist, kann ein Unterschied im Farbwert jeweils ermittelt und als Wert gespeichert werden. Dabei kann auch von einer Transformation eines Farbwertes zu einem dazugehörigen Referenzfarbwert gesprochen werden. Durch das Kalibrierverfahren können die zum Zeitpunkt der Aufnahme des digitalen Bildes herrschenden Lichtverhältnisse sozusagen herausgerechnet werden. Anders ausgedrückt werden die von der Kamera erfassten Farbwerte mittels der Referenzfarben und deren zugehörigen Referenzfarbwerten korrigiert.

Nach dem Durchführen des Kalibrierverfahrens kann dann ein mittels der Kamera aufgenommener Farbwert 4 mit den gespeicherten Farbwerten 1, 2, und 3 der Referenzfarben verglichen werden. Wird beispielsweise ein Farbwert 3 einer Referenzfarbe ermittelt, der einen vorbestimmten Farbunterschied, beispielsweise einen minimalen Farbunterschied zu dem Farbwert 4 aufweist, so kann dem Farbwert 4 der dem Farbwert 3 zugeordnete Referenzfarbwert zugeordnet werden.

In verschiedenen Ausführungsbeispielen kann das Kalibrierverfahren mit nur einer Referenzfarbe auf dem Kalibriermittel und einem dazugehörigen Referenzfarbwert durchgeführt werden. In verschiedenen Ausführungsbeispielen können eine Mehrzahl an Referenzfarben und eine Mehrzahl von jeweils dazugehörigen Referenzfarbwerten verwendet werden. Die Verwendung einer Mehrzahl von Referenzfarben hat den Vorteil, dass in dem für eine Ermittlung eines Haarfarbwertes relevanten Farbspektrum eine Mehrzahl von Kalibrierten Farbwerten vorliegen kann.

Es ist vorstellbar, dass bei dem Kalibrierverfahren das Aufnehmen der Kalibrierstruktur, d.h. der Faser und den Referenzfarben auf der Faser, wiederholend bzw. mehrfach durchgeführt wird. Mittels der Kamera können fortlaufend Bilder von dem Kalibriermittel aufgezeichnet werden. Dies hat den Vorteil, dass die Ermittlung der Referenzfarben optimiert durchgeführt werden kann, da beispielsweise nach einer dreifachen hintereinander ausgeführten Ermittlung einer Referenzfarbe mittels der Kamera ein Mittelwert aus den drei ermittelten Farbwerten gebildet werden kann. In verschiedenen Ausführungsbeispielen können weitere Verfahren bereitgestellt werden, die aus einer Mehrzahl von gemessenen Farbwerten einen zutreffendsten ermitteln.

Ferner kann durch eine Ausgestaltung des Kalibriermittels in Form mindestens einer Faser oder einer Haarsträhne, d.h. einer Mehrzahl von Fasern oder Einzelfasern, bei dem Kalibrierverfahren nicht alleine der Einfluss der Lichtverhältnisse auf das Messergebnis sondern weiterhin auch der Einfluss der Oberflächenbeschaffenheit (keratinische Faser) auf das Messergebnis berücksichtigt werden. Eine Mehrzahl von Fasern kann vorliegend als Strähne, Haarsträhne, Referenzhaarsträhne, Null-Strähne oder 0-Strähne bezeichnet werden.

Mittels der Verwendung eines Kalibriermittels, das mindestens eine Faser aufweist, kann ein Schädigungsgrad des Haares ermittelt werden. Softwareseitig kann im digitalen Bild eine Oberflächenbeschaffenheit der natürlichen Haarfasern des Nutzers oder einer Haarsträhne des Nutzers mit der Oberflächenbeschaffenheit der mindestens einen Faser oder Strähne des Kalibriermittels verglichen werden. In verschiedenen Ausführungsbeispielen können mittels eines Vergleichs der Haarstruktur des Nutzers mit der mindestens einen Faser des Kalibriermittels Schädigungsgrade am Haar, die beispielswiese durch mechanische Einflüsse wie Kämmen, Toupieren, die Verwendung von Lockenwicklern usw. entstehen können, ermittelt werden. Ferner können in verschiedenen Ausführungsbeispielen Einflüsse von Wärme auf das Haar, beispielsweise mittels eines Lockenstabs usw., festgestellt werden. Abhängig von dem Schädigungsgrad der Haare des Nutzers kann dem Nutzer beispielsweise ein auf den Schädigungsgrad zugeschnittenes Pflegemittel oder ein Mittel für bessere und langanhaltende Färbeergebnisse auf einer Ausgabevorrichtung bereitgestellt werden.

Ferner wird durch das Aufbringen der Referenzfarben auf die mindestens eine Faser ein sehr kleines Kalibrierinstrument bereitgestellt, welches unauffällig im oder am Haar des Nutzers mitgeführt werden kann. Dabei kann der mindestens eine Marker beliebige Formen aufweisen, beispielswiese eine quadratische Fläche, eine rechteckige Fläche, eine kreisrunde Fläche aufweisen, aber auch in Form eines Barcodes oder QR-Codes ausgeführt sein.

Bei dem Verfahren kann eine Kamera, beispielsweise die Kamera eines Smartphones oder eines Tablets oder einer Webcam, vom Nutzer selbst oder von einer weiteren Person derart ausgerichtet werden, dass von der Kalibrierinformation auf dem Kalibriermittel ein digitales Bild aufgenommen werden kann. Anders ausgedrückt kann der Nutzer oder eine weitere Person, der/die das Kalibriermittel bzw. die mindestens eine Faser mit der Kamera aufnehmen möchte, die Kamera derart über das Kalibriermittel/mindesten eine Faser positionieren, dass das Kalibriermittel in dem digitalen Bild abgebildet wird. So kann mindestens eine Faser, die die Kalibrierinformation bereitstellen kann, im digitalen Bild abgebildet sein. Ferner kann auch eine Strähne, die aus einer Mehrzahl von Fasern besteht und Kalibrierinformationen aufweisen kann, abgebildet werden.

In verschiedenen Ausführungsformen kann das Ermitteln der mindestens einen Faser im digitalen Bild mittels mindestens eines Markers ein Ermitteln eines nicht natürlichen Farbverlaufs innerhalb der mindestens einen Faser und/oder eines charakteristischen Farbtons auf der mindestens einen Faser im digitalen Bild aufweisen.

In verschiedenen Ausführungsbeispielen kann die Farbinformation beispielsweise eine Parametrisierung in einem bekannten Farbraum aufweisen, beispielsweise in einem L*a*b*-Farbraum (wobei L* die Helligkeit einer Farbe angibt, a* den Grün- und Rotanteil und b* den Blau- und Gelbanteil der Farbe) in einem RGB-Farbraum durch Farbanteile in Rot, Grün und Blau, in einem CMYK-Farbraum durch Farbanteile in Cyan, Magenta, Gelb und Schwarz, oder in einem beliebigen anderen Farbraum, z.B. CIELUV-Farbraumsystem oder /1/2/3/.

In verschiedenen Ausführungsbeispielen kann ein Farbraum, dem die Farbinformation (Haarfarbinformation und Bildfarbinformation) entstammt, so beschaffen sein, dass eine ermittelte oder dargestellte Farbe unabhängig von einem Medium ist, durch welches die Farbe ermittelt oder dargestellt wird (z.B. Bildschirm, Drucker, Scanner, menschliches Auge, usw.). Der Farbraum kann beispielsweise ein L*a*b*-Farbraum sein, die Farbinformation ein beispielsweise mittels a* und b* parametrisierter Farbton. Die einheitliche Darstellung in dem mediumunabhängigen Farbraum ermöglicht es, ein realitätsnahes zu erwartendes Färbeergebnis zu präsentieren.

In verschiedenen Ausführungsbeispielen kann auf vorteilhafte Weise erreicht werden, dass bei dem Kalibrierverfahren das Kalibriermittel mittels mindestens eines Markers in dem digitalen Bild bei einer Bildanalyse ermittelt werden kann. Das Kalibriermittel kann anhand des mindestens einen Markers beispielsweise von anderen Objekten wie den Haaren des Nutzers oder von Hautbereichen an Stirn und Ohren im aufgenommenen digitalen Bild unterschieden werden.

Ein nicht natürlicher Haarverlauf, beispielsweise ein Bereich, in dem sich schwarze oder weiße Teilbereiche zum Kennzeichnen des Kalibriermittels abwechseln, oder sich farbige Bereiche abwechseln, kann vorteilhaft dazu verwendet werden, um im digitalen Bild mittels Bildanalyse das Kalibriermittel auffindbar zu gestalten. In verschiedenen Ausführungsbeispielen können Muster auf dem Kalibriermittel bereitgestellt sein, welche sichtbar oder unsichtbar für das menschliche Auge sind und sich in ihrer Struktur von der natürlichen Struktur von Haaren unterscheiden. Ferner kann in verschiedenen Ausführungsbeispielen die mindestens eine Faser einen variablen Durchmesser aufweisen.

Es können beispielsweise mindestens zwei nicht natürliche Farbverläufe auf dem Kalibriermittel im digitalen Bild vorhanden sein. Die Position von beispielsweise zwei nicht natürlichen Farbverläufen oder mindestens eines charakteristischen Farbtons kann beispielsweise mittels einer Bildanalyse bzw. softwareseitig im digitalen Bild ermittelt werden. Es kann beispielsweise mittels einer Software zur Bildanalyse ermittelt werden, dass die Referenzfarben zwischen den ermittelten nicht natürlichen Farbverläufen oder den charakteristischen Farbtönen positioniert sind. Eine weitere Untersuchung des digitalen Bildes könnte sich dann beispielsweise auf den Bereich zwischen den nicht natürlichen Farbverläufen oder zwischen beispielsweise zwei charakteristischen Farbtönen beschränken, in dem die Referenzfarben abgebildet sein können. Ein charakteristischer Farbton kann beispielsweise mindestens ein Neonton oder ein Grauwert in einem sonst nicht grauen Haar sein.

In verschiedenen Ausführungsformen kann das Ermitteln der Mehrzahl von Farbwerten im digitalen Bild ein Ermitteln einer Mehrzahl von Referenzbereichen, in denen die Referenzfarben vorgesehen sind, mittels mindestens eines weiteren Markers aufweisen.

In verschiedenen Ausführungsbeispielen kann auf vorteilhafte Weise erreicht werden, dass die Referenzfarben beispielsweise innerhalb von Referenzbereichen, die mit mindestens einem Marker gekennzeichnet sein können, softwareseitig im digitalen Bild erleichtert oder optimiert ermittelt werden können. Mehrere Marker können beispielsweise ermöglichen, dass eine Lage des Kalibriermittels im Bild ermittelt werden kann. In verschiedenen Ausführungsbeispielen kann ferner jeder Referenzbereich, in dem eine bestimmte Referenzfarbe aufgebracht sein kann, mit mindestens einem Markers versehen sein, wobei die jeweiligen Marker genau den ihn zugeordneten Referenzbereich kennzeichnet können.

In verschiedenen Ausführungsbeispielen kann mindestens ein Referenzbereich, in dem eine Referenzfarbe abgebildet ist, mittels drei oder vier Markern an den Ecken des Referenzbereichs markiert sein. Mittels der Anordnung der Marker kann dann eine Position einer Referenzfarbe und eine Zuordnung der Referenzfarben zu Referenzfarbwerten erreicht werden. In verschiedenen Ausführungsbeispielen kann jede mögliche Positionierung von Markern in oder um einen der Mehrzahl von Referenzbereiche vorgesehen sein.

Werden nun die jeweiligen Marker im digitalen Bild ermittelt, kann eine Information über die Position der jeweiligen Referenzfarben, beispielsweise zwischen den Marker, über dem Marker, links oder rechts des Markers erhalten werden. Softwareseitig kann dann beispielsweise einen Farbwert jeder Referenzfarbe ermittelt werden.

Ferner kann in verschiedenen Ausführungsbeispielen der mindestens eine Marker selbst Information aufweisen, die mindestens eine Angabe über einen Referenzfarbwert aufweist, der einer jeweiligen Referenzfarbe zugeordnet sein kann.

In verschiedenen Ausführungsformen kann ein Verfahren vorgesehen sein, bei welchem bei dem Ermitteln der mindestens einen Faser im digitalen Bild und/oder bei dem Ermitteln einer Mehrzahl von Farbwerten einer Mehrzahl von Referenzfarben Marker mit Farbwerten verwendet werden, die in einem Farbspektrum in einem Wellenlängenbereich von 10 Nanometer bis 1 Millimeter, vorzugsweise in einem Wellenlängenbereich von 380 Nanometer bis 780 Nanometer liegen, oder vorzugsweise in einem Wellenlängenbereich von 10 Nanometer bis 380 Nanometer oder in einem Wellenlängenbereich von 780 Nanometer bis 1 Millimeter liegen.

Nach dem erfindungsgemäßen Gedanken wird auf vorteilhafte Weise erreicht, dass mittels mindestens eines für das Auge sichtbaren Markers ein einfacher Weg geschaffen werden kann, das Kalibriermittel mit dem menschlichen Auge zu erfassen und beispielsweise von den natürlichen Haaren des Nutzers zu unterscheiden. Der Nutzer oder eine weitere Person können das Kalibriermittel am Kopf eines Nutzers sehen und dementsprechend kann die Kamera auf das Kalibriermittel auf einfache Art und Weise ausgerichtet werden.

Unsichtbare Marker können den Vorteil haben, dass das Kalibriermittel sich nicht vom restlichen Haar des Nutzers abhebt, d.h. nicht von Nutzer als im Haar störend aufgefasst werden kann.

In verschiedenen Ausführungsformen kann ein Verfahren vorgesehen sein, bei dem das Ermitteln des mindestens einen Markers durch mindestens ein optisches Verfahren realisiert wird.

In verschiedenen Ausführungsbeispielen kann mittels eines softwareseitigen Bildanalyseverfahrens der mindestens eine Marker im digitalen Bild ermittelt werden. Um die Verarbeitung großer Bilder zu ermöglichen, kann es ratsam sein, eine Aufteilung des digitalen Bildes in einzelne Teilbilder (Bildsegmente) vorzunehmen. Einzelne Bildteile können explizit einem Objekt, beispielsweise den Kalibriermittel oder einem Haarbereich, zugeordnet werden, ohne dass das restliche Bild weiterverarbeitet wird. Dies kann eine gewaltige Datenreduktion bei der weiteren Berechnung zur Folge haben. Ein Bild kann nach sehr unterschiedlichen Verfahren segmentiert werden, beispielswiese nach einer Segmentierung nach Farbe, einer Segmentierung nach Textur oder einem Finden von Bereichen innerhalb einer geschlossenen Kontur.

Beispielsweise können sich mittels der Methode des Clustering Bereiche im mit der Kamera aufgenommenen digitalen Bild ermitteln lassen. Beim Clustering werden zunächst zwei Zentren im digitalen Bild frei gewählt, das eine ist ein Mittelpunkt der Klasse 1, das andere ist ein Mittelpunkt der Klasse 2. Nun werden um diese Zentren herum angrenzende Gebiete mit gleichen Eigenschaften gesucht und zur jeweiligen Klasse hinzugefügt. Es bilden sich Gebiete im digitalen Bild aus. Je nach Anforderung können noch weitere Zentren hinzugenommen werden, so dass zum Schluss zusammenhängende Flächen mit gleichen Eigenschaften eine Klasse bilden.

Mittels der Methode der Amplitudenprojektion können sich beispielsweise Bereiche im digitalen Bild ermitteln lassen. Sind bestimmte Merkmale eines Bildes bekannt, beispielsweise ein unnatürlicher bzw. untypischer Farbverlauf auf dem Kalibriermittel, so lässt sich oft eine relativ einfache Methode der Segmentierung finden. Enthält das Eingangsbild zum Beispiel nur einen, durch seinen Farbwert auffallenden Bereich, der gefunden werden soll, so bietet sich die Amplitudenprojektion an. Pro Zeile und Spalte eines mittels der Kamera aufgenommenen digitalen Bildes wird ein Wert errechnet, der den Mittelwert der Grauwerte dieser einen Zeile oder Spalte angibt. Weiß man beispielsweise, dass der gesuchte Bereich im digitalen Bild der einzige dunkle Bereich ist, so kann man das digitale Bild zurechtschneiden, indem man alle Zeilen oder Spalten auswählt, bei denen der Wert einen gewissen Schwellenwert übersteigt und der Rest kann ausgeblendet werden.

Beispielsweise können bei verschiedenen Ausführungsformen bei Referenzfarben auf dem Kalibriermittel, die auf eine Ausgangshaarfarbe eines Nutzers mit hellen, blonden Haaren abgestimmt ist, Marker verwendet werden, die schwarz oder dunkle Farbwerte aufweisen. Aufgrund des größeren Farbunterschieds bzw. Kontrastes zwischen der Farbe der hellen Haare und den dunklen Markern können die dunklen Marker optimal im digitalen Bild von den hellen Haaren bei einer digitalen Bildanalyse unterschieden werden.

Beispielsweise kann bei verschiedenen Ausführungsformen bei Referenzfarben auf dem Kalibriermittel, die auf eine Ausgangshaarfarbe eines Nutzers mit braunen oder dunklen Haaren abgestimmt ist, Marker verwendet werden, die weiße oder helle Farbwerte aufweisen. Auch hier können aufgrund des größeren Farbunterschieds zwischen der Farbe der dunklen Haare und den hellen oder weißen Markern die hellen Marker optimal im digitalen Bild von den dunklen Haaren bei der digitalen Bildanalyse unterschieden werden.

Bei unterschiedlichen Ausführungsbeispielen kann im digitalen Bild eine Konturverfolgung zum Trennen von Bereichen im digitalen Bild mittels Polygonzügen hilfreich sein. Anstatt jeden Pixel einer digitalen Bildfläche seinem Objekt zuzuordnen, wird eine Einkreisung anhand einer Koordinatenliste vorgenommen. Bei der Konturverfolgung können insbesondere die Schritte Finden von Konturen, Konturverkettung und Konturapproximation durchgeführt werden. Bei dem Finden von Konturen kommt ein sogenannter Bug-Follower zum Einsatz. Ein Bug-Follower bewegt sich mittels eines Algorithmus über die Pixel des digitalen Bildes und untersucht die Kontur so lange, bis er wieder den Startpunkt erreicht hat.

Eine Konturverkettung kann insbesondere dann zum Einsatz kommen, wenn durch äußere Einflüsse Linien im digitalen Bild unterbrochen sind. Es wird mit lokalen oder globalen Operatoren erkannt, ob beispielsweise eine Linie weitergeführt werden kann, ein Rauschen oder Fehler damit umgangen werden kann. Im Anschluss kann die Kontur durch eine Funktion angenähert werden auch bezeichnet als Konturapproximation. Durch diesen weiteren Schritt wird ebenfalls die spätere Auswertung möglich, denn Funktionen sind weitaus besser zu analysieren bzw. zu vergleichen, als Punktfolgen.

Ein Prozessor kann bei einer Bildanalyse des digitalen Bildes in der Lage sein, die Position bzw. die Koordinaten der Marker im digitalen Bild zu erfassen und daraus beispielsweise ermitteln, wo im Bild das Kalibriermittel oder beispielsweise Referenzfarben auf dem Kalibriermittel im digitalen Bild angeordnet sind. Es können die Positionen der Referenzfarben auf dem Kalibriermittel bestimmt werden und die Farbwerte derjenigen Pixel im digitalen Bild ermittelt werden, die in der zuvor bestimmten Position im digitalen Bild vorhanden sind.

Insbesondere können auch die Segmentierung und die Merkmalsextraktion Anwendung finden. Verwendet werden können insbesondere die Verfahren des Thresholding und des Region-Growing, die zur Segmentierung von digitalen Bilder eingesetzt werden. Bei einer Nachweisextraktion aus digitalen Bildern kann beispielsweise der sogenannte Canny Kantendetektor und/oder der sogenannte Harris Corner Detektor verwendet werden. Bei der Segmentierung von Bildern gibt es drei große Gruppen von Segmentierungsmethoden: Die Threshold-basierte, Kanten-basierte und Regionen-basierte Segmentierung. Beispielsweise kann bei einer Threshold-basierten Segmentierung, auch Thresholding genannt, mit einem oder mehreren, mit statistischen oder dynamischen Schwellwerten gearbeitet werden. Thresholding ist die Anwendung eines Schwellwertes auf ein Graubild. Eine nicht-lineare Funktion konvertiert das aufgenommene Bild in ein binäres digitales Bild, in dem jedes Pixel entweder weiß oder schwarz eingefärbt wird abhängig davon, ob der untersuchte Pixelwert über oder unter einem definierten Grenzwert liegt.

Ferner kann das Verfahren Region-Growing zur Identifizierung von gleichen Bildregionen eingesetzt werden. Ausgehend von einem Start-Pixel wird für benachbarte Pixel geprüft, ob sie eine Gleichheit aufweisen, um der Region hinzugefügt zu werden. Falls dies nicht zutrifft, wäre sie als außerhalb liegend verworfen. Um sinnvolle Regionen zu erhalten ist das Festlegen von Seed-points nötig. Der Region-Growing Algorithmus setzt voraus, dass sich das zu suchende Objekt im digitalen Bild ausreichend vom Hintergrund unterscheidet, beispielsweise eine Referenzfarbe auf dem Kalibriermittel. Es ist folglich notwendig, gezielte Merkmale in digitalen Bildern zu suchen, die zu Objekten korrelieren. Hierzu eignen sich insbesondere Kantendetektoren, denn Kanten sind markante Bildmerkmale. Eine Karte bildet meist den Abschluss eines Objektes, beispielsweise eine Kante einer Referenzfarbe oder eine kante eines Markers. Eine kante kann jedoch auch in anderen Zusammenhängen auftreten. Ferner kann sich eine Karte durch einen Intensitätsunterschied, beispielsweise einen Farbintensitätsunterschied einer Referenzfarbe zu ihrer Umgebung, auszeichnen.

Im Allgemeinen arbeiten Kantendetektoren in drei wesentlichen Schritten: Es wird eine Maske auf das digitale Bild angewendet, um Intensitätsgradienten zu erzeugen. Mittels Thresholding über das Gradientenbild werden nennenswerte Gradienten selektiert. Im Anschluss daran werden mittels Operatoren und Algorithmen die errechneten Daten zu Kanten, beispielsweise zu den Kanten einer Referenzfarbe, verbunden.

Beispielsweise kann bei verschiedenen Ausführungsformen mindestens eine Position einer Kante eines nicht natürlichen Farbverlaufes auf dem Kalibriermittel ermittelt werden. Ferner kann bei verschiedenen Ausführungsformen eine Position von Referenzfarbbereichen auf dem Kalibriermittel im digitalen Bild ermittelt werden.

Neben den Kantendetektoren können aber auch die Eckdetektoren verwendet werden. Zwei Kanten enden in einer Ecke, die wiederum für einen Objektabschluss, beispielsweise einen Abschluss einer Referenzfarbe oder eines Markers, steht und dessen Koordinaten im digitalen Bild erfasst werden können. Ecken können beispielsweise mittels Gradienten oder mit Hilfe von Morphologie im digitalen Bild ermittelt werden. Ein Ziel der morphologischen Bildverarbeitung kann einerseits ein neues Bild sein, das Relevantes hervorhebt. Ein weiteres Ziel kann eine Liste sein, die mit aus dem digitalen Bild bestimmten Messgrößen gefüllt wird. Beispielsweise kann bei verschiedenen Ausführungsformen mindestens eine Position einer Ecke eines nicht natürlichen Farbverlaufes auf dem Kalibriermittel ermittelt werden. Ferner kann bei verschiedenen Ausführungsformen eine Position mindestens einer Ecke von mindestens einem Referenzfarbbereichen, in dem die Referenzfarbe positioniert ist, auf dem Kalibriermittel im digitalen Bild ermittelt werden.

In verschiedenen Ausführungsformen können Objekte wie beispielsweise ein nicht natürlicher Farbverlauf auf dem Kalibriermittel oder ein Bereich, der eine charakteristische Farbe aufweist, im digitalen Bild mittels Templatematching ermittelt werden. Das Templatematching gehört zur modellbasierten Segmentierung. Beim Templatematching wird mittels vollständiger Suche entschieden wie gut ein vorgegebenes Modell (Template) zu einem bestimmten Pixelbereich passt (match). Das Modell beschreibt möglichst genau das zu suchende Objekt, beispielsweise eine Faser, ein Farbfeld oder ein Marker, und seine Einbettung in die Umgebung. Dabei wird das Objekt-Template in einem Pixelabstand von einer Bounding-Box begrenzt. Mehr Umgebung als notwendig würde lediglich die Fehlerrate erhöhen. Das Template sollte möglichst die gleiche Größe und Orientierung aufweisen wie das zu ermittelnde Objekt im digitalen Bild. Beispielsweise könnte ein Template eines nicht natürlichen Farbverlaufs eines Haares und/oder einer Faser und/oder einer Haarsträhne und/oder eines Markers und/oder eines Farbfeldes usw. erstellt werden, welches dem Algorithmus, der auf dem Prozessor abläuft, bekannt ist. Dieses Template könnte dann im digitalen Bild mittels eines Prozessors mindestens einmal ermittelt werden und auch die Position des Templates im digitalen Bild ermittelt werden. Wird beispielsweise das Template, beispielsweise ein Marker, im digitalen Bild und die Ausrichtung des Templates im digitalen Bild zweimal ermittelt, so kann beispielsweise der Bereich zwischen den ermittelten Positionen, auf denen sich das Template befindet, beispielsweise ein Farbfeld, zur weiteren Untersuchung des digitalen Bildes nach der Farbe des Farbfeldes herangezogen werden. In dem Bereich zwischen den ermittelten Templates im digitalen Bild kann das mindestens eine Farbreferenzfeld mit der Referenzfarbe vorgesehen sein.

Ferner kann auf dem Kalibriermittel eine weitere Information, beispielsweise in Form eines Kodiercodes aufgebracht sein, der mittels einer Dekodiervorrichtung, beispielsweise einer Kamera, gelesen werden kann. Beispielsweise kann ein Barcode oder QR-Code zum Definieren des Referenzfarbwertes der Referenzfarbfelder verwendet werden. Mittels des QR-Codes kann jeder Referenzfarbe auf dem Kalibriermittel eine eindeutige Nummer zugeordnet werden, die dann der mittels Kamera erfasst werden kann. So kann beispielsweise den Referenzfarben eine RGB-Farbwert im RGB-Farbraum oder ein CMYK-Farbwert im CMYK-Farbraum zugeordnet werden. So kann beispielsweise einer ersten Referenzfarbe auf dem Kalibriermittel ein Referenzfarbwert "dunkelbraun", einer zweiten Referenzfarbe ein Referenzfarbwert "mittelbraum" und einer dritten Referenzfarbe auf dem Kalibriermittel ein Referenzfarbwert "hellbraun" zugeordnet werden, oder einer ersten Referenzfarbe auf dem Kalibriermittel ein Referenzfarbwert "weiß", einer zweiten Referenzfarbe ein Referenzfarbwert "gelb" und einer dritten Referenzfarbe auf dem Kalibriermittel ein Referenzfarbwert "gold" zugeordnet werden.

In verschiedenen Ausführungsformen kann ein Verfahren vorgesehen sein, bei welchem das Zuordnen der in dem digitalen Bild ermittelten Mehrzahl von Farbwerten zu den Referenzfarbwerten ein Speichern der ermittelten Farbwerte zu den zugehörigen Referenzfarbwerten in einem Speicher aufweist.

Es kann auf vorteilhafte Weise erreicht werden, dass jeweils ein Paar von Datensätzen vorliegt, das jeweils in einem Speicher gemeinsam abgespeichert werden kann. Wird der Referenzfarbwert zu einer Referenzfarbe ermittelt werden, so kann dies durch Auslesen des der Referenzfarbe zugehörigen Referenzfarbwertes erreicht werden.

In verschiedenen Ausführungsformen kann ein Verfahren vorgesehen sein, bei welchem die Referenzfarben im digitalen Bild basierend auf einer unterschiedlichen Farbvalenz und/oder einer unterschiedlichen spektralen Zusammensetzung und/oder einer unterschiedlichen Helligkeit ermittelt werden.

Die Farbvalenz eines Lichtstrahls ist eine physiologische Kenngröße, welche die Wirkung des Lichtstrahls auf die farbempfindlichen Sinneszellen des menschlichen Auges beschreibt. Im Gegensatz zur Spektralverteilung, also die vollständige Information über die im Lichtstrahl vorhandenen Spektralfarben, beschränkt sich die Farbvalenz auf die weniger umfangreiche und durch drei Zahlenwerte darstellbare Information, welche Farbwahrnehmung der Lichtstrahl im Auge auslöst.

Beispielsweise können Differenzen von Referenzfarben bei einer unterschiedlichen Helligkeit der Farben leichter ermittelt werden.

In verschiedenen Ausführungsformen kann ein Verfahren vorgesehen sein, bei welchem das Aufnehmen eines digitalen Bildes von mindestens einer Kalibrierinformation ein Aufnehmen einer semipermanent am Haar eines Nutzers gekoppelten Faser in Form einer Haarverlängerung oder in Form eines Einflechtens der Faser in das Haar des Nutzers aufweist. Für den Begriff Haarverlängerung kann auch der Begriff Hair Extension oder Extension verwendet werden.

In verschiedenen Ausführungsformen kann ein Verfahren vorgesehen sein, bei welchem das Aufnehmen eines digitalen Bildes von mindestens einer Kalibrierinformation ein Aufnehmen einer mittels Implantation in die Kopfhaut des Nutzers permanent am Haar eines Nutzers gekoppelten Faser aufweist.

Durch die semipermanente oder permanente Anbringung des Kalibriermittels an das Haar des Nutzers kann das Kalibrierverfahren zu jeder Zeit und an jedem Ort ausgeführt werden, da das Kalibriermittel stets am Körper getragen werden kann. Der Einsatz eines semipermanent oder permanent befestigten Kalibriermittels kann den Nutzer von der Notwendigkeit entbinden, ein zusätzliches externes Kalibriermittel einzusetzen und ermöglich die Haarfarbbestimmung zu jeder Zeit an jedem Ort.

Ferner kann das Kalibriermittel mit einer Klammer oder einem Haargummi am Haar des Nutzers angebracht sein.

In verschiedenen Ausführungsformen kann ein Verfahren vorgesehen sein, wobei das Aufnehmen eines digitalen Bildes von mindestens einer Kalibrierinformation mittels einer Kamera eines Smartphones oder eines Tablets durchgeführt wird.

Die Realisierung des Kalibrierverfahrens auf einem Smartphone oder einem Tablet kann ermöglichen, dass das Kalibrierverfahren ortsunabhängig, d.h. mobil durchgeführt werden kann. Beispielsweise kann eine Kalibrierung der Kamera unterwegs bei verschiedenen Lichtverhältnissen zuhause, beim Friseur, an einem Verkaufsort für Haarbehandlungsmittel ("Point of Sale") oder im Urlaub durchgeführt werden.

In verschiedenen Ausführungsformen kann ein Verfahren vorgesehen sein, wobei die Kalibrierinformation, vorzugsweise die Referenzfarben, derart vorgesehen werden, dass sie auf einen Ausgangsfarbton des Haars des Nutzers abgestimmt werden.

Dies kann den Vorteil haben, dass bereits bei der Kalibrierung der Kamera Farbwerte verwendet werden, deren Farbwerte nahe bei einem Haarfarbwert der Haare des Nutzers liegen. Die Kamera kann bereits in einem Farbenbereich kalibriert werden, in den beispielsweise der Haarfarbwert der Haare eines Nutzers bei einer möglichen späteren Haarfarbermittlung eines Nutzers fällt. Dies kann zu einer Optimierung des Verfahrens zum Ermitteln einer aktuellen Haarfarbe eines Nutzers hinsichtlich einer Ausführungszeit des Verfahrens führen.

Erfindungsgemäß ist ein Verfahren zum computergestützten Ermitteln von Haarfarbinformation vorgesehen, wie im Anspruch 10 definiert, das ein Durchführen eines Verfahrens zum Kalibrieren einer Kamera gemäß der Erfindung aufweist, und ferner ein Ermitteln eines Haarfarbwertes von Haar eines Nutzers im digitalen Bild, ein Ermitteln desjenigen ermittelten Farbwertes, der einen Farbunterschied zu dem ermittelten Haarfarbwert derart aufweist, dass er ein vorgegebenes Unterschiedskriterium erfüllt, ein Bereitstellen des dem ermittelten Farbwert zugeordneten Referenzfarbwertes als aktueller Haarfarbwert, ein Ermitteln eines Zielhaarfarbwertes, ein Ermitteln eines Datensatzes basierend auf dem aktuellen Haarfarbwert und dem Zielhaarfarbwert, ein Bereitstellen mindestens einer für den Nutzer relevanten Information basierend auf dem Datensatz, aufweist.

Mittels des Verfahrens kann auf vorteilhafte Weise erreicht werden, dass die aktuelle Haarfarbe des Nutzers basierend auf einem Kalibrierverfahren der Kamera auf einfache Weise und präzise ermittelt werden kann. Die aktuelle Haarfarbe kann genau ermittelt werden, da die Kamera vor dem Durchführen der Haarfarbermittlung des Nutzers bereits kalibriert wurde. Bei dem Verfahren zum computergestützten Ermitteln von Haarinformation kann ein im digitalen Bild ermittelter Farbwert des Haars des Nutzers mit einem Farbwert, der mittels einer Mehrzahl von Referenzfarben kalibriert worden ist, verglichen werden. Es kann somit auf einfache Weise dem ermittelten Haarfarbwert des Nutzers ein tatsächlicher Haarfarbwert zugeordnet werden.

Die für den Nutzer relevante Information kann eine Produktempfehlung, vorzugsweise hinsichtlich eines Haarfärbemittels, eine Haarbehandlungsempfehlung, vorzugsweise hinsichtlich einer Einwirkzeit eines Haarfärbemittels, eines Mischverhältnisses von Farbe und Entwickler oder einer Pflegebehandlung, oder eine Farbempfehlung, vorzugsweise hinsichtlich eines dekorativen Kosmetikums oder eines Schmuck- oder Kleidungsstücks, umfassen

In verschiedenen Ausführungsformen kann ein Verfahren vorgesehen sein, bei welchem das Ermitteln eines Haarfarbwertes ein Ermitteln eines Haarfarbwertes in einer Haarbereichfläche im digitalen Bild aufweist.

Die Ermittlung der Haarbereichfläche im digitalen Bild kann beispielsweise realisiert werden, wenn nur ein einzelnes digitales Bild mit der Kamera aufgenommen wird, in dem das Kalibriermittel und die Haare des Nutzers und beispielswiese weitere Objekte abgebildet sind. Es muss folglich ein Erfassen des Kalibriermittels sowie der Haare des Nutzers durchgeführt werden. Das Verfahren sieht daher vorteilhaft vor, im digitalen Bild eine Haarbereichfläche zu ermitteln, in der die Haare im digitalen Bild abgebildet sind.

Eine Haarbereichfläche kann beispielsweise in einem digitalen Bild ermittelt werden, indem eine Häufigkeitsverteilung von Farbwerten einzelner Bildpunkte des digitalen Bildes ermittelt wird. Eine Untergruppe der Bildpunkte, beispielsweise eine Gruppe von Bildpunkten, welche in einem Farbraum nahe bei einem vorgegebenen Farbwert liegen, kann der Haarbereichfläche zugeordnet werden.

Ferner kann auch eine räumliche Nähe und/oder ein linearer Verlauf von Bildpunkten gleicher oder ähnlicher Farbe, genutzt werden, um eine Haarbereichfläche, beispielsweise insbesondere Teile des Haars wie beispielsweise eine Faser oder eine Haarsträhne, welche nicht als geschlossene Fläche abgebildet sein können, zu ermitteln.

Es kann bei dem Ermitteln einer Haarbereichfläche beispielsweis eine Statistik häufiger Haarfarben verwendet werden, um einen Auswahlbereich in einem Farbraum, in welchem Bildpunkte eines digitalen Bildes einem Haarbereich zugeordnet werden können, so zu ermitteln, dass sämtliches oder im Wesentlichen sämtliches Haar, beispielsweise Haupthaar ohne beispielsweise Augenbraun, Wimpern oder Bart usw., in einem digitalen Bild diesem Haarbereich zugeordnet wird. Andererseits kann ein Bereich, welcher kein oder im Wesentlichen kein Haar abbildet, dem Haarbereich nicht zugeordnet werden.

Es kann bei dem Ermitteln einer Haarbereichfläche eine Statistik häufiger Haarfarben verwendet werden, wobei für eine Mehrzahl von Haarfarben, welche beim menschlichen Haar häufig auftreten, jeweils für mindestens eine Farbinformation eine typische Häufigkeitsverteilung ermittelt werden kann.

Die Farbinformation kann beispielsweise eine in einem Farbraum parametrisierte Farbinformation sein. Beispielsweise kann die Farbinformation mittels einer Mehrzahl von Parametern so charakterisiert sein, dass eine Farbe mittels der Mehrzahl von Parametern eindeutig ermittelbar sein kann. So kann in verschiedenen Ausführungsbeispielen die Farbinformation beispielsweise eine Parametrisierung in einem bekannten Farbraum aufweisen, beispielsweise in einem L*a*b*-Farbraum, wobei L* die Helligkeit einer Farbe, a* den Grün- und Rotanteil und b* den Blau- und Gelbanteil der Farbe in einem RGB-Farbraum angibt. Ferner kann auch ein CMYK-Farbraum verwendet werden. Unter einem digitalen Bild kann hierin ein Datenpaket verstanden werden, welches von einem Datenverarbeitungssystem als zweidimensionale (flächige) Anordnung von Bildpunkten darstellbar ist, beispielsweise in einem Koordinatensystem, welches eine x-Achse und eine y-Achse aufweist, wobei jedem Bildpunkt zumindest eine Farbinformation zugeordnet ist, welche beispielsweise als Farbe eines Pixels eines Monitors oder eines gedruckten Punktes eines ausgedruckten Bilds darstellbar ist. Dabei kann das digitale Bild beispielsweise ein mit einer Digitalkamera aufgenommenes Foto oder ein Einzelbild einer mit einer digitalen Kamera aufgenommenen Videosequenz (wobei das Verfahren gemäß verschiedenen Ausführungsformen dann beispielsweise an einer Mehrzahl von Einzelbildern der Videosequenz angewandt werden kann) sein.

In verschiedenen Ausführungsformen kann ein Verfahren vorgesehen sein, bei welchem das Ermitteln des Zielfarbwertes ein Ermitteln des Zielhaarfarbwertes mittels einer Eingabevorrichtung, vorzugsweise mittels einer Tastatur oder mittels eines berührungsempfindlichen Bildschirms eines Smartphones oder Tablets, aufweist.

Die Zielfarbe kann von dem Nutzer auf einfach Weise beispielsweise nach Auswählen eines Zielhaarfarbwertes von einer Mehrzahl von dem Nutzer präsentierten Zielhaarfarbwerte durch Betätigen beispielsweise mindestens einer mechanischen Taste der Eingabevorrichtung oder einer Taste, die in dem berührungsempfindlichen Bildschirm des Smartphones oder des Tablets vorgesehen ist, ausgewählt werden.

In verschiedenen Ausführungsformen kann ein Verfahren vorgesehen sein, bei welchem das Ermitteln des Zielhaarfarbwertes ein Auswählen des Zielhaarfarbwertes aus einer Mehrzahl auswählbarer gespeicherter Zielhaarfarbwerte aufweist.

In verschiedenen Ausführungsformen kann ein Verfahren vorgesehen sein, bei welchem das Ermitteln eines Datensatzes basierend auf dem aktuellen Haarfarbwert und dem Zielhaarfarbwert mittels der Kamera durchgeführt wird oder das Ermitteln eines Datensatzes basierend auf dem aktuellen Haarfarbwert und dem Zielhaarfarbwert mittels einer externen Plattform realisiert wird.

Das Ermitteln eines Datensatzes basierend auf dem aktuellen Haarfarbwert und dem Zielhaarfarbwert kann mittels der Kamera selbst erreicht werden, in dem beispielsweise der Datensatz in mindestens einem Speicher in der Kamera bereitgestellt wird. Dies hat den Vorteil, dass selbst bei einer unterbrochenen Datenverbindung zwischen der Kamera, beispielsweise der Kamera eines Smartphones oder Tablets, ein Datenaustausch zwischen den lokal abgespeicherten Daten mit hoher Geschwindigkeit durchführbar ist.

Ein Datensatz basierend auf dem aktuellen Haarfarbwert und dem Zielhaarfarbwert, der auf einer externen Plattform, beispielsweise auf einem Server oder einem dezentral angeordneten Computer bereitgestellt wird, hat den Vorteil, dass auf die externe Plattform durch mehrere Nutzer gleichzeitig zugegriffen werden kann. Die Verlagerung der Daten bezüglich des ermittelten Haarfarbwertes und des Zielhaarfarbwertes auf eine externe Plattform, beispielsweise in eine Datenbank auf einem Server, hat den Vorteil, dass die Haarfarbwerte nutzerabhängig gespeichert werden können und für statistische Auswertungen weiterverwendet werden können. Auch kann von unterschiedlichen Orten aus und mit einer Mehrzahl von Systemen zum Ermitteln von Haarinformation auf die externe Datenbank zugegriffen werden.

In verschiedenen Ausführungsformen kann ein Verfahren vorgesehen sein, bei dem das Verfahren mittels einer mobilen Applikation durchgeführt wird.

In verschiedenen Ausführungsformen kann ein Verfahren vorgesehen sein, bei welchem das Bereitstellen mindestens einer Information ein schriftliches und/oder grafisches Präsentieren auf einer Ausgabevorrichtung, vorzugsweise einem Bildschirm eines Smartphones oder eines Tablets, aufweist. Alternativ das Bereitstellen mindestens einer Information mittels Sprachausgabe erfolgen. Durch die schriftliche und/oder grafische Präsentation von Information basierend auf dem Datensatz kann auf vorteilhafte Weise erreicht werden, dass die Information in einer übersichtlichen und dem Nutzer zugänglichen Art und Weise den Nutzer dargestellt werden kann.

In verschiedenen Ausführungsformen kann ein Verfahren vorgesehen sein, bei welchem mittels der Ausgabevorrichtung ein Ergebnis eines Farbabgleichs des aktuellen Haarfarbwertes mit einem mittels einer Eingabevorrichtung ausgewählten Zielhaarfarbwertes als x%-Farbübereinstimmung oder als x%-Farbharmonie dem Nutzer präsentiert wird.

So kann dem Nutzer auf vorteilhafte Weise und übersichtlich ein Zusammenhang zwischen dem Haarfarbwert oder Farbton der aktuellen Haarfarbe und dem Farbwert oder Farbton der Zielhaarfarbe dargestellt werden. Vorstellbar ist ferner die Darstellung des Ergebnisses des Farbabgleichs in einem dafür geeigneten Diagramm.

Erfindungsgemäß ist ein Kalibriermittel zum Kalibrieren einer Kamera vorgesehen, wie im Anspruch 13 definiert, das mindestens eine Faser von einer Mehrzahl von Naturhaarfasern oder von naturhaarähnlichen Fasern, eine Mehrzahl von unterschiedlichen Referenzfarbstrukturen, die auf der mindestens einen Faser aufgebracht sind, und mindestens einen Marker zum Ermitteln der mindestens einen Faser in einem digitalen Bild wobei die mindestens eine Faser zwei Marker aufweist, die einen nicht natürlichen Farbverlauf aufweisen und wobei ein Bereich zwischen den zwei Markern vorgesehen ist, der Information hinsichtlich dreier Referenzfarben aufweist.

Das Kalibriermittel kann beispielsweise aus Echthaar eines Menschen, eines Pferdes, einer Kuh, eines Schafes oder weiterer bzw. anderer Tiere hergestellt werden. Ferner kann die mindestens eine Faser als künstlich hergestellte Faser oder als künstlich hergestellte Strähne, anders ausgedrückt aus Kunsthaar, vorgesehen sein. Die Referenzfarben können auf der mindestens einen Faser oder auf einer Mehrzahl von Fasern, d.h. auf einer Strähne, aufgebracht sein.

Der mindestens eine Marker kann zur genauen Identifizierung eines Objektes beispielsweise in einem digitalen Bild dienen.

Der mindestens eine Marker kann als punktförmiger Marker, als Marker in einer quadratähnlichen Form, als rechteckähnlicher Marker oder als dreieckähnlicher Marker realisiert sein. In verschiedenen Ausführungsbeispielen können weitere beliebige Formen von Markern verwendet werden, auch solche, die weitere Information aufweisen können. Insbesondere können Marker vorgesehen sein, die neben ihrer Position auch Farbwertinformation aufweisen können. So kann ein Marker derart konfiguriert sein, dass er durch seine Form bzw. Gestaltung Information über einen Farbwert beispielsweise einen Farbwert einer Referenzfarbe auf dem Kalibriermittel aufweist. Dies kann beispielsweise mittels eines Barcode-ähnlichen Markers oder QR-Code-ähnlichen Markers realisiert sein, wobei die mittels des Markers gespeicherte Information ein Hexadezimalcode im Hexadezimalsystem sein kann, der einer Farbe zugeordnet sein kann.

Zusätzlich können weitere Informationen auf dem Kalibriermittel mittels eines RFID (Radio Frequency Identification")- oder eines NFC ("Near Field Communication")-Chips bereitgestellt werden.

Erfindungsgemäß ist ein Kalibriermittel zum Kalibrieren einer Kamera vorgesehen, wobei die zwei Marker einen nicht natürlichen Farbverlauf oder mindestens einen charakteristischen Farbton aufweisen.

Ein Marker, der einen nicht natürlichen Farbverlauf aufweist oder einen charakteristischen Farbton aufweist, ist von natürlichen Haarfasern oder anderen Objekten bei einer Analyse eines digitalen Bildes zuverlässiger zu unterscheiden und zu erfassen. Ein nicht natürlicher Farbverlauf kann beispielsweise eine Aneinanderreihung von sich wiederholenden Grauwerten oder Farbwerten sein, die mittels der Kamera ermittelbar sind.

In verschiedenen Ausführungsformen kann ein Kalibriermittel zum Kalibrieren einer Kamera vorgesehen sein, wobei der mindestens eine Marker Farbwerte aufweist, die in einem Farbspektrum in einem Wellenlängenbereich von 10 Nanometer bis 1 Millimeter, vorzugsweise in einem Wellenlängenbereich von 380 Nanometer bis 780 Nanometer liegen, oder vorzugsweise in einem Wellenlängenbereich von 10 Nanometer bis 380 Nanometer oder in einem Wellenlängenbereich von 780 Nanometer bis 1 Millimeter liegen.

Ein mit dem Auge sichtbarer Marker hat den Vorteil, dass das Kalibriermittel von menschlichen Auge gesehen werden kann und die Kamera auf das Kalibriermittel mit dem mindestens einen Marker positioniert werden kann. Ein mit dem Auge nicht sichtbarer Marker hat den Vorteil, dass der mindestens eine Marker vom menschlichen Auge nicht gesehen werden kann, aber beispielsweise durch eine technische Vorrichtung erfasst werden kann. Der Marker kann sich somit optisch unauffällig im Haar befinden.

In verschiedenen Ausführungsformen kann ein Kalibriermittel zum Kalibrieren einer Kamera vorgesehen sein, wobei das Kalibriermittel mindestens einen weiteren Marker auf dem Kalibriermittel aufweist, wobei mittels des mindestens einen weiteren Markers mindestens eine der Mehrzahl von Referenzfarbstrukturen auf dem Kalibriermittel in einem digitalen Bild ermittelbar ist.

Der mindestens eine Marker kann vorgesehen sein, um beispielsweise eine Position einer Referenzfarbe im digitalen Bild ermittelbar zu machen. Die Verwendung mindestens eines Markers zur Lokalisierung mindestens einer Referenzfarbe im digitalen Bild hat den Vorteil, dass bei der Ermittlung des Farbwertes einer Referenzfarbe im digitalen Bild derjenige Pixel einer Mehrzahl von Pixeln im digitalen Bild erfasst wird, der in einem durch den mindestens einen Marker bestimmten Bereich im digitalen Bild liegt. Die Verwendung von mindestens einem Marker bei der Ermittlung von Farbwerten stellt ein optimiertes Ermittlungsverfahren von Farbwerten dar.

In verschiedenen Ausführungsformen kann ein Kalibriermittel zum Kalibrieren einer Kamera vorgesehen sein, wobei sich die Mehrzahl von Referenzfarbstrukturen in einer Farbvalenz und/oder einer spektralen Zusammensetzung und/oder einer Helligkeit unterscheiden.

Beispielsweise können Unterschiede von Referenzfarben bei einer unterschiedlichen Helligkeit der Farben leichter ermittelt werden.

In verschiedenen Ausführungsformen kann ein Kalibriermittel zum Kalibrieren einer Kamera vorgesehen sein, wobei die Referenzfarbstrukturen auf einen Ausgangsfarbwert von Haar eines Nutzers abstimmbar sind.

Dies kann vorteilhaft sein, da bereits bei der Kalibrierung der Kamera Farbwerte verwendet werden, deren Farbwerte nahe bei einem Haarfarbwert der Haare des Nutzers liegen. Die Kamera kann bereits in einem Farbenbereich kalibriert werden, in den beispielsweise der Haarfarbwert der Haare eines Nutzers bei einer möglichen späteren Haarfarbbestimmung eines Nutzers fällt. Dies kann zu einer Optimierung des Verfahrens zum Ermitteln einer aktuellen Haarfarbe eines Nutzers führen.

In verschiedenen Ausführungsformen kann ein Kalibriermittel zum Kalibrieren einer Kamera vorgesehen sein, wobei das Kalibriermittel semipermanent als Haarverlängerung oder mittels eines Einflechtens des Kalibriermittels in Haar eines Nutzers vorgesehen ist oder permanent mittels Implantieren des Kalibriermittels in die Kopfhaut des Nutzers vorgesehen ist.

Durch die semipermanente oder permanente Anbringung des Kalibriermittels an das Haar des Nutzers kann das Kalibrierverfahren zu jeder Zeit und an jedem Ort ausgeführt werden. Der Einsatz eines semipermanent oder permanent befestigten Kalibriermittels kann den Nutzer von der Notwendigkeit entbinden, ein zusätzliches externes Kalibriermittel einzusetzen und ermöglich die Haarfarbbestimmung zu jeder Zeit an jedem Ort.

Erfindungsgemäß ist ein System zur computergestützten Ermittlung von Haarfarbinformation vorgesehen, wie im Anspruch 14 definiert, wobei das System das oben beschriebene Kalibriermittel, eine Kamera zum Aufnehmen eines digitalen Bildes des Kalibriermittels und/oder von Haar eines Nutzers; einen Prozessor zum Ermitteln des Kalibriermittels und/oder von Farbwerten in dem digitalen Bild, eine Eingabevorrichtung zum Auswählen eines Zielhaarfarbwertes, und eine Ausgabevorrichtung zum Bereitstellen von Information hinsichtlich mindestens eines Haarfarbwertes, aufweisen.

Die Kamera kann eine hochauflösende Digitalkamera sein (HD-Kamera oder high definition camera).

Die Kamera kann eine Ultra HD Kamera sein und einer Auflösung von 4K (4096x2160) aufweisen. Ferner kann die Kamera eine Auflösung von 8K (7680x4320) aufweisen. Die Kamera kann insbesondere dafür vorgesehen sein, kleine Strukturen mit einer hohen Auflösung aufzunehmen.

Der Prozessor kann eine zentrale Recheneinheit bzw. CPU oder ein Mikrocontroller sein, der einen Prozess oder Algorithmus vorantreibt oder ein Programm ausführt. Der Prozessor kann beispielsweise in einem Computer, einem Smartphone oder einem Tablet realisiert sein.

Die Eingabevorrichtung kann eine Tastatur eines Computers, eines Smartphones oder eines Tablets sein. Die Eingabevorrichtung kann als ein berührungsempfindlicher Bildschirm bzw. Touchscreen, beispielsweise einer Ausgabevorrichtung, realisiert sein.

Die Ausgabevorrichtung kann ein Bildschirm, beispielsweise eines Smartphones oder Tablets sein.

In verschiedenen Ausführungsformen kann ein System vorgesehen sein, bei welchem die Kamera eine Farbbildkamera eines Smartphones oder eines Tablets ist.

In verschiedenen Ausführungsformen kann ein System vorgesehen sein, bei welchem die Kamera den Prozessor aufweist und derart konfiguriert ist, dass sie mittels des Prozessors ermittelte Farbwerte analysiert.

In verschiedenen Ausführungsformen kann ein System vorgesehenen sein, bei welchem die Kamera, der Prozessor, die Eingabevorrichtung und die Ausgabevorrichtung in einem Smartphone oder Tablet realisiert sind und, wobei das Smartphone oder das Tablet die von dem Prozessor ermittelten Farbwerte analysiert.

In verschiedenen Ausführungsformen kann ein System vorgesehen sein, bei welchem das System zum Analysieren der mittels des Systems ermittelten Farbwerte die ermittelten Farbwerte an eine externe Plattform übermittelt.

In verschiedenen Ausführungsformen kann ein System vorgesehen sein, bei welchem die Eingabevorrichtung als eine Tastatur und/oder als ein berührungsempfindlicher Bildschirm des Smartphones oder des Tablets realisiert ist, und bei welchem mittels der Eingabevorrichtung mindestens ein Zielhaarfarbwert auswählbar ist.

In verschiedenen Ausführungsformen kann ein System vorgesehenen sein, bei welchem die Ausgabevorrichtung die Information hinsichtlich mindestens eines Haarfarbwertes schriftlich und/oder grafisch darstellt.

In verschiedenen Ausführungsformen kann ein System vorgesehen sein, bei welchem die Ausgabevorrichtung Zielhaarfarbwerte aus einer Mehrzahl von auswählbaren gespeicherten Zielhaarfarbwerten darstellt.

In verschiedenen Ausführungsformen kann ein System vorgesehen sein, bei welchem die Ausgabevorrichtung ein Ergebnis eines Farbabgleichs eines ermittelten aktuellen Haarfarbwertes mit einem mittels der Eingabevorrichtung ausgewählten Zielhaarfarbwertes als x%-Farbübereinstimmung oder als x%-Farbharmonie darstellt.

In verschiedenen Ausführungsformen kann ein System vorgesehen sein, bei welchem die Ausgabevorrichtung dem Nutzer ferner Information hinsichtlich einer Produktempfehlung, vorzugsweise hinsichtlich eines Haarfärbemittels, einer Haarbehandlungsempfehlung, vorzugsweise hinsichtlich einer Einwirkzeit eines Haarfärbemittels, eines Mischverhältnisses von Farbe und Entwickler zum Erreichen des gewünschten Zielfarbwertes oder einer Pflegebehandlung, einer Empfehlung zur Auswahl eines Farbtons dekorativer Kosmetik sowie einer Empfehlung zur Auswahl eines Farbtons von Schmuck und/oder Kleidung darstellt.

Die oben beschriebenen Ausgestaltungen und genannten Vorteile beziehen sich auf die beschriebenen Verfahren, auf das Kalibriermittel und das System.

Auch wenn das Verfahren hierin teilweise anhand eines einzelnen digitalen Bildes veranschaulicht ist, ist es selbstverständlich, dass das Verfahren für eine Mehrzahl von Bildern, beispielsweise eine Sequenz von digitalen Bildern, beispielsweise ein Video, genutzt werden kann.

Ausführungsbeispiele der Erfindung sind in den Figuren dargestellt und werden im Folgenden näher erläutert.

Es zeigen
- Figur 1: ein Ablaufdiagramm, welches ein Verfahren zum Kalibrieren einer Kamera gemäß verschiedenen Ausführungsbeispielen darstellt;
- Figur 2: eine schematische Darstellung eines Kalibriermittels zum Kalibrieren einer Kamera gemäß verschiedenen Ausführungsbeispielen;
- Figuren 3-1 bis 3-2: ein Ablaufdiagramm, welches ein Verfahren zum Ermitteln von Haarinformation gemäß verschiedenen Ausführungsbeispielen darstellt;
- Figur 4: eine schematische Darstellung eines Systems zum Ermitteln von Haarinformation gemäß verschiedenen Ausführungsbeispielen.

In der folgenden ausführlichen Beschreibung wird auf die beigefügten Zeichnungen Bezug genommen, die Teil der vorliegenden Anmeldung bilden und in denen zur Veranschaulichung spezifische Ausführungsformen gezeigt sind, in denen die Erfindung ausgeübt werden kann.

In dieser Hinsicht wird eine Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich von selbst, dass andere Ausführungsformen benutzt und strukturelle oder logische Änderungen vorgenommen werden können, ohne von dem Schutzumfang der vorliegenden Erfindung, wie in den Ansprüchen definiert, abzuweichen.

Ferner versteht sich von selbst, dass die Merkmale der hierin beschriebenen verschiedenen beispielhaften Ausführungsformen miteinander kombiniert werden können, sofern nicht spezifisch anders angegeben.

Die folgende ausführliche Beschreibung ist deshalb nicht in einschränkendem Sinne aufzufassen, und der Schutzumfang der vorliegenden Erfindung wird durch die angefügten Ansprüche definiert.

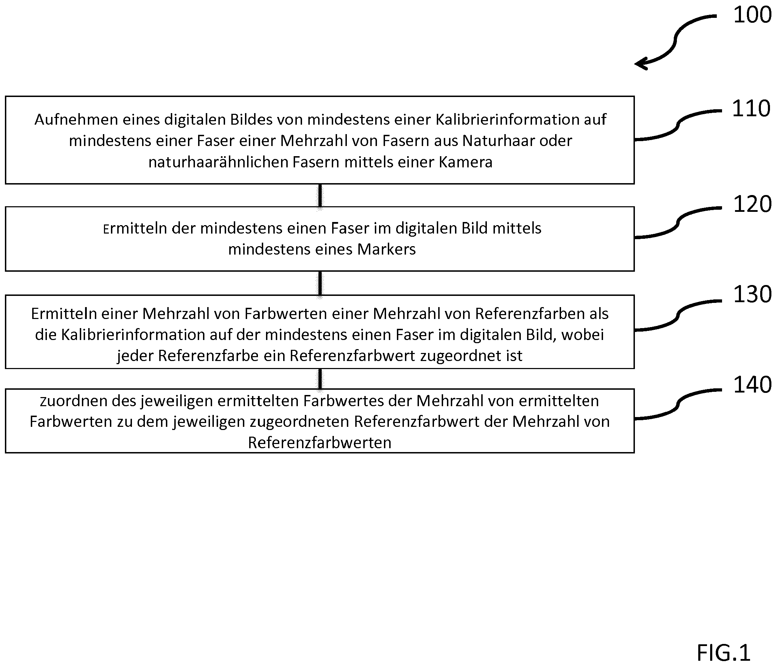

Fig. 1 zeigt ein schematisches Ablaufdiagramm 100 eines Verfahrens zum Kalibrieren einer Kamera gemäß verschiedenen Ausführungsbeispielen.

Das Verfahren kann aufweisen: ein Aufnehmen eines digitalen Bildes von mindestens einer Kalibrierinformation auf mindestens einer Faser einer Mehrzahl von Fasern aus Naturhaar oder naturhaarähnlichen Fasern mittels einer Kamera (in 110), ein Ermitteln der mindestens einen Faser im digitalen Bild mittels mindestens eines Markers (in 120), ein Ermitteln einer Mehrzahl von Farbwerten einer Mehrzahl von Referenzfarben als die Kalibrierinformation auf der mindestens einen Faser im digitalen Bild, wobei jeder Referenzfarbe ein Referenzfarbwert zugeordnet ist (in 130), und ein Zuordnen des jeweiligen ermittelten Farbwertes der Mehrzahl von ermittelten Farbwerten zu dem jeweiligen zugeordneten Referenzfarbwert der Mehrzahl von Referenzfarbwerten (in 140).

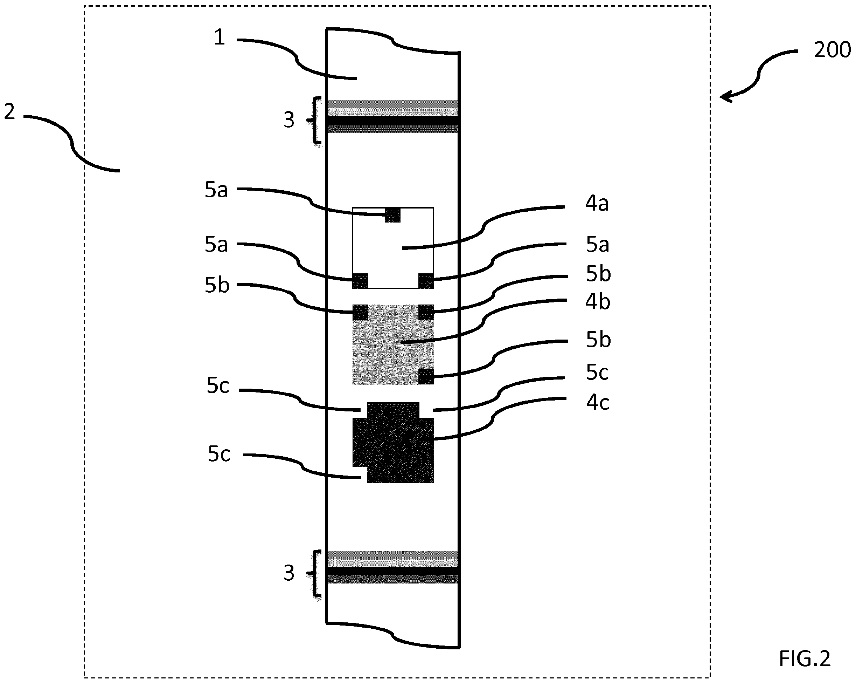

In verschiedenen Ausführungsformen kann das beschriebene Verfahren zum Kalibrieren einer Kamera mittels eines Kalibriermittels ausgeführt werden, beispielsweise eines Kalibriermittels wie in Zusammenhang mit FIG. 2 beschrieben.

Fig. 2 zeigt eine schematische Darstellung 200 eines Kalibriermittels 1 gemäß verschiedenen Ausführungsbeispielen.

Mittels einer digitalen Kamera kann ein digitales Bild 2 des Kalibriermittels 1 aufgenommen werden.

Das Kalibriermittel 1 ist vorliegend in Form einer Faser veranschaulicht. Die Faser kann aus Naturhaar sein oder ein naturhaarähnliches Material aufweisen. Das Kalibriermittel 1 kann eine Mehrzahl von Fasern aufweisen, beispielswiese aus mehreren Fasern bestehen und/oder eine Strähne, insbesondere eine Haarsträhne sein.

Erfindungsgemäß sind auf dem Kalibriermittel 1 zwei Marker 3 vorgesehen. Die zwei Marker 3 weisen einen nicht natürlichen Farbverlauf innerhalb des Kalibriermittels 1 auf. Durch den nicht natürlichen Farbverlauf ist das Kalibriermittel 1 auf dem digitalen Bild 2 durch ein Bildanalyseverfahren lokalisierbar. Zwischen den beiden Markern 3 ist ein Bereich auf dem Kalibriermittel 1 vorgesehen, der Information hinsichtlich dreier Referenzfarben 4a, 4b, 4c aufweist. Das Kalibriermittel 1 weist ferner die Marker 5a, 5b, 5c auf, welche auf dem Kalibriermittel 1 aufgebracht sind. Ferner sind die Marker 5a, 5b, 5c jeweils um einen Bereich im digitalen Bild angeordnet, der eine Referenzfarbe 4a, 4b, 4c aufweist.

Die Marker 3, 5a, 5b, 5c sind geeignet, um im digitalen Bild 2 automatisch, beispielsweise mittels einer Software, identifiziert zu werden. Die Marker 3, 5a, 5b, 5c weisen beispielsweise kontraststreiche Struktur und/oder markante Ecken auf.

So können eine Mehrzahl von Markern 5a, 5b, 5c beispielsweise drei Farbbereiche 4a, 4b, 4c markieren, in denen im digitalen Bild 2 die Referenzfarben positioniert sind.

Die in Fig. 2 abgebildeten Formen der Marker 3, 5a, 5b, 5c sind nur beispielhaft und es ist selbstverständlich, dass beliebige Formen für die Marker 3, 5a, 5b, 5c bzw. Positionsreferenzen verwendet werden können.

Die Marker, 5a, 5b, 5c, die verwendet werden können, um eine Position und/oder eine Ausrichtung eines Referenzfarbbereiches im digitalen Bild 2 zu ermitteln, können auf unterschiedliche Weise positioniert sein. Sie können beispielsweise wie in Fig. 2 veranschaulicht derart an einem Randbereich der Referenzfarbfelder vorgesehen sein, dass jeweils mindestens eine Referenzfarbe 4a oder 4b oder 4c zwischen den Markern 5a (in Fig. 2 dargestellt durch einen weißen Bereich) oder 5b (in Fig. 2 dargestellt durch einen grauen Bereich) oder 5c (in Fig. 2 dargestellt durch einen schwarzen Bereich) angeordnet ist.

Ferner können zur Unterscheidung von einer Mehrzahl von Referenzfarben 4a, 4b, 4c die Marker 5a, 5b, 5c an unterschiedlichen Positionen der Referenzfarbfelder angeordnet sein, so wie in Fig.2 ersichtlich.

Mittels einer Bildanalyse des mittels der Kamera aufgenommenen digitalen Bildes 2 wird zuerst das Kalibriermittel 1 mittels des mindestens einen Markers 3 im digitalen Bild ermittelt. Die ist auch möglich, wenn die Marker für das menschliche Auge unsichtbar sind.

Sind die Marker 3 für das menschliche Auge sichtbar, dann kann die Kamera von Hand über das Kalibriermittel positioniert werden.

Ist die Position des Kalibriermittels 1 im digitalen Bild 2 ermittelt worden, so können beispielsweise in einem Bereich zwischen den Markern 3 die Position und Farbwerte der Referenzfarben 4a, 4b, 4c ermittelt werden. Dazu wird eine Anordnung der Marker 5a im digitalen Bild ermittelt. Beispielsweise können die Marker 5a in Fig. 2 derart um eine erste Referenzfarbe 4a angeordnet sein, dass in der Mitte oben ein Marker 5a und unten zwei Marker 5a jeweils in den Ecken vorgesehen sind.

Um die Position der mittleren Referenzfarbe 4b im digitalen Bild zu ermitteln, wird beispielsweise nach einer Ausrichtung der Marker 5b gesucht, wobei zwei Marker 5b an den oberen Ecken positioniert sind und ein Marker 5b in der rechten unteren Ecke positioniert ist. Soll beispielsweise eine dritte Position einer dritten Referenzfarbe 4c ermittelt werden, so kann nach einer Ausrichtung der Marker 5c im digitalen Bild ermittelt werden, bei der beispielsweise zwei Marker 5c in den oberen Ecken positioniert sind und ein Marker 5c in der unteren linken Ecke positioniert ist.

Die Marker 5a, 5b, 5c können sich in ihrer Form untereinander unterscheiden, so dass eine genaue Ermittlung des jeweiligen Markers 5a, 5b, 5c ermöglicht wird.

Der mindestens eine Marker 3 kann beispielsweise flächig in einer rechteckigen Form so wie in Fig. 2 veranschaulicht realisiert sein. In verschiedenen Ausführungsbeispielen können auch quadratische oder runde Flächen der Marker 3 verwendet werden. Ferner kann in verschiedenen Ausführungsbeispielen der mindestens eine Marker 3 einmal um das Kalibriermittel 1 herum verlaufen.

Die mindestens eine Referenzfarbe 4a, 4b, 4c kann quadratisch wie in Fig. 2 veranschaulicht aber auch kreisförmig oder rechteckig oder in einer beliebigen anderen Form realisiert sein. Die Referenzfarben 4a, 4b, 4c können auch derart vorgesehen sein, dass der mindestens eine Referenzfarbbereich unterbrochen oder ununterbrochen bzw. durchgängig um das Kalibriermittel 1 verläuft.

Zur Zuordnung des jeweiligen Referenzfarbwertes zu der jeweiligen Referenzfarbe 4a, 4b, 4c kann eine Information beispielsweise durch einen Barcode, einen QR-Code oder ein anderes Kodier- und Dekodierverfahren realisiert sein.

Gemäß verschiedenen Ausführungsformen kann der mindestens eine Marker 3 am Kalibriermittel 1 derart angeordnet sein, dass mittels einer Bildanalyse die beispielsweise mindestens eine Faser von anderen Objekten in dem digitalen Bild unterschieden werden kann. In Fig. 2 ist der mindesten eine Marker 3 mittels vier unterschiedlichen Farbfeldern realisiert. Jedoch ist die Erfindung nicht darauf beschränkt. In verschiedenen Ausführungsbeispielen können beliebig viele Farbfelder verwendet werden.

In verschiedenen Ausführungsbeispielen kann die bekannte Position zumindest eines Markers 3, 5a, 5b, 5c dazu genutzt werden, um Objekte beispielsweise ein Kalibriermittel 1 oder Farbinformationsbereiche auf dem Kalibriermittel 1 im digitalen Bild computergestützt, beispielsweise mittels eines Bilderkennungsverfahrens bzw. mittels einer Bilderkennungssoftware zu ermitteln.

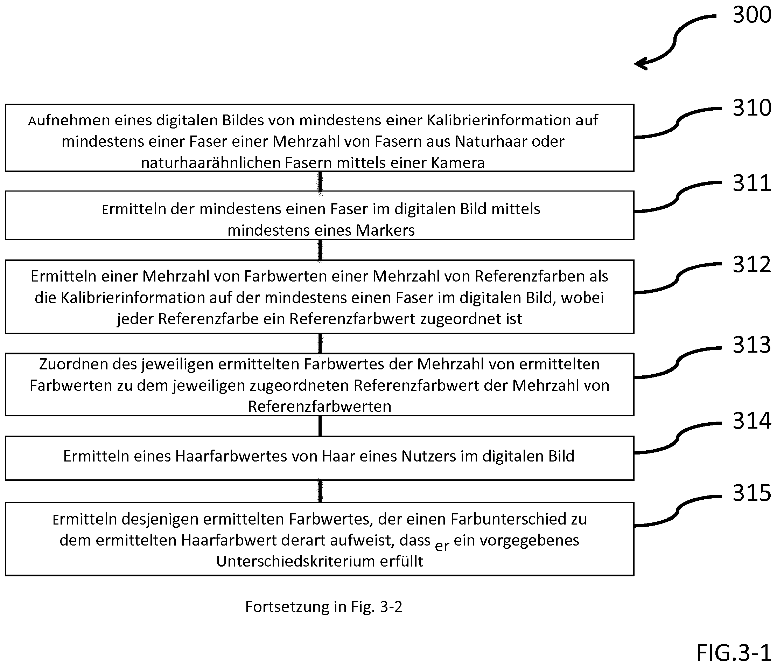

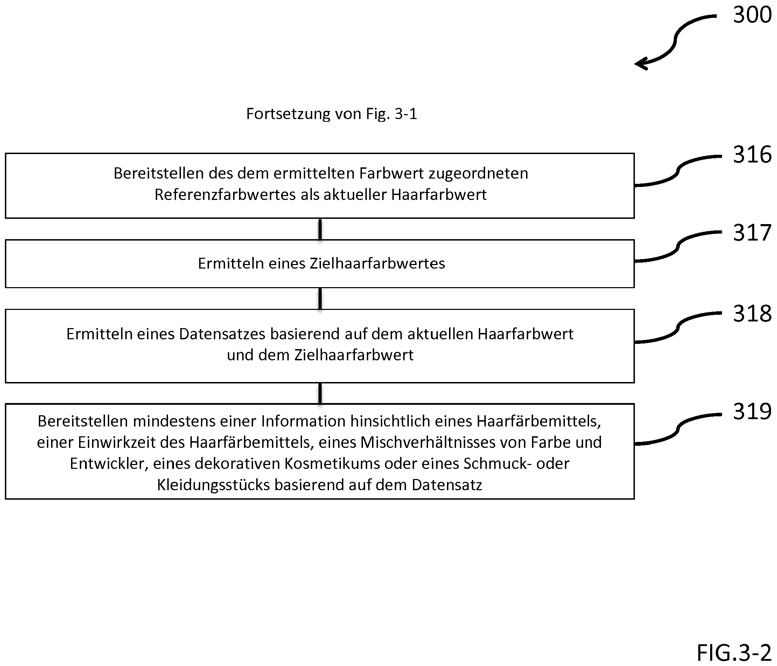

Die Figuren 3-1 bis 3-2 zeigen ein schematisches Ablaufdiagramm eines Verfahrens zum Ermitteln nutzerspezifischer Haarfarbinformation gemäß verschiedenen Ausführungsbeispielen. Das Verfahren weist die Verfahrensschritte des in Fig. 1 veranschaulichten Ablaufdiagramms auf. Es können die Schritte 310 bis 313 den Schritten 110 bis 140 entsprechen. Das Verfahren kann aufweisen: ein Aufnehmen eines digitalen Bildes von mindestens einer Kalibrierinformation auf mindestens einer Faser einer Mehrzahl von Fasern aus Naturhaar oder naturhaarähnlichen Fasern mittels einer Kamera (in 310), ein Ermitteln der mindestens einen Faser im digitalen Bild mittels mindestens eines Markers (in 311), ein Ermitteln einer Mehrzahl von Farbwerten einer Mehrzahl von Referenzfarben als die Kalibrierinformation auf der mindestens einen Faser im digitalen Bild, wobei jeder Referenzfarbe ein Referenzfarbwert zugeordnet ist (in 312), und ein Zuordnen des jeweiligen ermittelten Farbwertes der Mehrzahl von ermittelten Farbwerten zu dem jeweiligen zugeordneten Referenzfarbwert der Mehrzahl von Referenzfarbwerten (in 313), ein Ermitteln eines Haarfarbwertes von Haar eines Nutzers im digitalen Bild (in 314), ein Ermitteln desjenigen ermittelten Farbwertes, der einen Farbunterschied zu dem ermittelten Haarfarbwert derart aufweist, dass er ein vorgegebenes Unterschiedskriterium erfüllt (in 315), ein Bereitstellen des dem ermittelten Farbwert zugeordneten Referenzfarbwertes als aktueller Haarfarbwert (in 316), ein Ermitteln eines Zielhaarfarbwertes (in 317), ein Ermitteln eines Datensatzes basierend auf dem aktuellen Haarfarbwert und dem Zielhaarfarbwert (in 318), ein Bereitstellen mindestens einer Information, beispielsweise hinsichtlich eines Haarfärbemittels, einer Einwirkzeit des Haarfärbemittels, eines Mischverhältnisses von Farbe und Entwickler, eines dekorativen Kosmetikums oder eines Schmuck- oder Kleidungsstücks, basierend auf dem Datensatz (in 319).

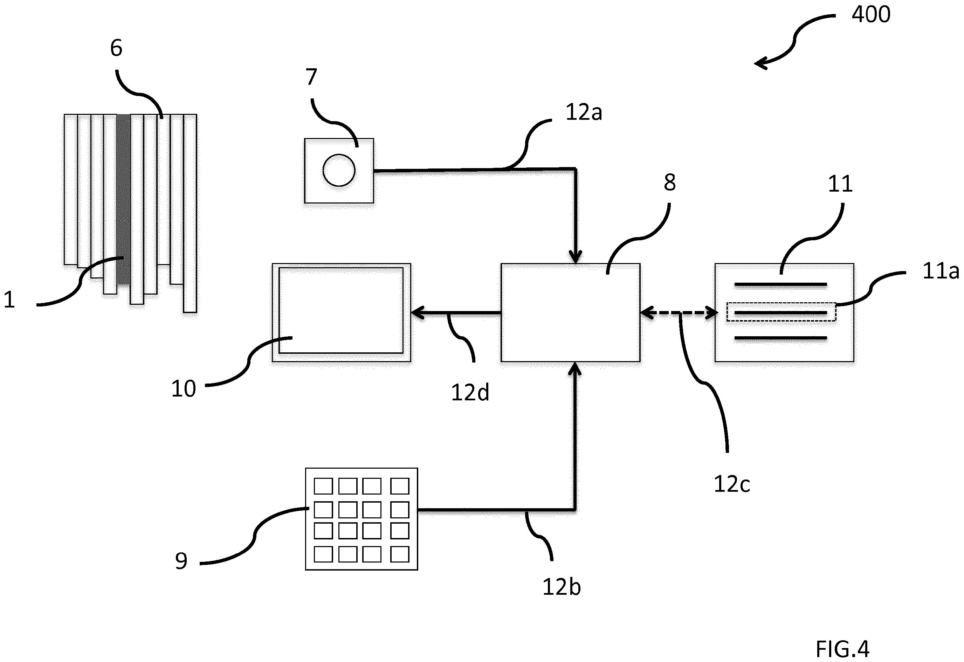

Fig. 4 zeigt eine schematische Darstellung 400 eines Systems zum computergestützten Ermitteln von Haarfarbinformation gemäß verschiedenen Ausführungsbeispielen. Das System kann gemäß verschiedenen Ausführungsbeispielen ein Kalibriermittel 1 aufweisen. In Fig. 4 ist das Kalibriermittel 1 in Form einer Faser in einem Bereich von natürlichen Haaren 6 eines Nutzers veranschaulicht. Das Kalibriermittel 1 kann mit der Kamera 7 aufgenommen werden. Dabei kann das Kalibriermittel 1 entweder alleine mit der Kamera aufgenommen werden und in einem weiteren Schritt kann das Haar 6 des Nutzers mit der Kamera aufgenommen werden.

Alternativ kann das Kalibriermittel 1 zusammen mit dem Haar 6 des Nutzers mittels der Kamera 7 in einem digitalen Bild aufgenommen werden. Es können somit entweder ein digitales Bild oder mehrere digitale Bilder mit der Kamera 7 aufgenommen werden.

Die Kamera 7 kann mittels einer Leitung 12a die digitale Information an einen Prozessor 8 zum Analysieren des mindestens einen digitalen Bildes übertragen. Mittels des Prozessors 8 und einer Bildanalysesoftware oder eines Algorithmus oder eines Programms kann in dem mindestens einen digitalen Bild das Kalibriermittel 1 ermittelt werden. Beispielsweise kann das Kalibriermittel anhand mindestens eines Markers ermittelt werden. Die Referenzfarben auf dem Kalibriermittel 1 können mittels weiterer Marker ermittelt werden. Der Prozessor 8 ordnet die Farbwerte der ermittelten Referenzfarben den jeweiligen dazugehörigen Referenzfarbwerten zu.

Mittels der Eingabevorrichtung 9 kann der Nutzer einen Zielhaarfarbwert auswählen, wobei mögliche Zielhaarfarbwerte mittels der Ausgabevorrichtung 10 dem Nutzer präsentiert werden können.

Die Ausgabevorrichtung 10 kann ein Bildschirm sein, beispielsweise ein so genannter OLED-Bildschirm. Darunter ist ein Bildschirm zu verstehen, der für eine Darstellung eines Bildes einer Mehrzahl organischer Leuchtdioden nutzt. Der Bildschirm kann ein Bildschirm eines Smartphones oder eines Tablets sein. Der Bildschirm kann einen berührungsempfindlichen Bildschirm aufweisen. Der Bildschirm kann ein Touchscreen sein.

Dem Prozessor 8 wird mittels der Leitung 12b die Information hinsichtlich des vom Nutzer ausgewählten Zielhaarfarbwertes bereitgestellt. Ausgehend von dem ermittelten Haarfarbwert des Nutzers und dem mit der Eingabevorrichtung 9 ermittelten Zielhaarfarbwert kann dann mittels des Prozessors 8 mittels einer Verbindung 12c auf einer externen Plattform 11, beispielsweise einer Datenbank, ein passender Datensatz 11a ermittelt werden. Die Verbindung 12c kann kabelgebunden oder drahtlos, beispielsweise eine Datenverbindung mittels Funk, WLAN oder mittels eines GSM-Netzes (Global System for Mobile Communications) realisiert sein.

Der Datensatz 11a weist beispielsweise Information hinsichtlich eines für den Nutzer geeigneten Haarfärbemittels, eines Haarpflegemittels, einer Einwirkzeit des Haarfärbemittels, ein Mischverhältnis von Farbe und Entwickler, ein dekoratives Kosmetikum oder ein Schmuck- oder Kleidungsstück auf.

Der jeweilige Datensatz 11a wird den Prozessor 8 bereitgestellt. Der Prozessor 8 leitet die aufbereitete Information basierend auf dem jeweiligen Datensatz sodann mittels der Leitung 12d an die Ausgabevorrichtung 10 weiter.

Mittels der Ausgabevorrichtung 10, beispielsweise ein Bildschirm, wird dem Nutzer benutzerbasierende Information schriftlich und/oder grafisch dargestellt. So kann dem Nutzer beispielsweise Information hinsichtlich eines Schädigungsgrades seines Haares, eines darauf abgestimmten Pflegemittels, ein Ergebnis eines Farbabgleichs des aktuellen Haarfarbtons mit einem Zielhaarfarbton als x%-Farbübereinstimmung oder als x%-Farbharmonie, eine Einwirkzeit eines Färbemittels, ein Mischverhältnis von Farbe und Entwickler, eine Auswahl eines Farbtons dekorativer Kosmetik, einer Auswahl eines Farbtons von Schmuck und/oder Kleidung präsentiert werden.

Die externe Plattform 11 kann auch vorgesehen sein, um die mit dem System ermittelten Farbwerte abzuspeichern und einer Mehrzahl von Nutzern bereitzustellen.

Die Kamera 7 kann gemäß verschiedenen Ausführungsformen derart eingerichtet sein, dass sie ein digitales Bild 2 eines Kalibriermittels 1, von Haar 6 eines Nutzers und von zusätzlichen Objekten aufnehmen kann. Die zusätzlichen Objekte können beispielsweise ein Gesicht und/oder ein Teil eines Körpers des Nutzers und/oder Kleidungsstücke sein.

Ein Bereich des digitalen Bildes 2, in dem das Kalibriermittel 1 abgebildet ist, kann als Kalibriermittelbereich bezeichnet werden. Anders ausgedrückt, kann im digitalen Bild 2 das Kalibriermittel 1 und weitere Objekte wie beispielsweise das Haar 6 eines Nutzers und Bereiche des Kopfes des Nutzers wie beispielsweise Haut abgebildet sein.

Ein Bereich des digitalen Bildes, in dem das Haar des Nutzers abgebildet ist, kann als Haarbereichfläche bezeichnet werden. Anders ausgedrückt kann die Kamera 7 eingerichtet sein, ein digitales Bild 2 von den Haaren 6 des Nutzers und Umgebung der Haare 6 des Nutzers aufzunehmen, derart, dass im digitalen Bild 2 zumindest ein Teil des Haares 6 des Nutzers abgebildet ist. In verschiedenen Ausführungsbeispielen kann im digitalen Bild 2 nur das Kalibriermittel 1 oder Haar 6 des Nutzers oder ein Hintergrundbereich usw. abgebildet sein.

Die mindestens eine Kamera 7 kann gemäß verschiedenen Ausführungsbeispielen eine Fotokamera oder eine Videokamera aufweisen, das heißt eine Kamera, die eingerichtet sein kann, eine Mehrzahl von Einzelbildern als Zeitfolge aufzuzeichnen. Andererseits kann die mindestens eine Kamera 7 eine Fotokamera zum Aufnehmen von Einzelbildern aufweisen.

In verschiedenen Ausführungsbeispielen kann die Kamera 7 eine Kamera eines Smartphones, eines Tablets oder einer Webcam sein. In verschiedenen Ausführungsbeispielen kann die Kamera 7 in dem Smartphone oder Tablet vorgesehen sein.

Die Kamera 7 kann eine hochauflösende Kamera sein (HD-Kamera oder high definition camera) sein. Die Kamera 7 kann eine Ultra HD Kamera sein und einer Auflösung von 4K (4096x2160) aufweisen. Ferner kann die Kamera 7 eine Auflösung von 8K (7680x4320) aufweisen. Die Kamera 7 kann insbesondere dafür vorgesehen sein, kleine Strukturen mit einer hohen Auflösung aufzunehmen.

Zur Kalibrierung der Kamera 7 kann ferner ein Weißabgleich durchgeführt werden. Eine für einen Weißabgleich verwendete Weißabgleichkarte, beispielsweise eine Graukarte, kann als zusätzliche Referenzfarbe auf dem Kalibriermittel vorgesehen sein. Vor Durchführung der Farb-Kalibrierung der Kamera kann gemäß verschiedenen Ausführungsformen zuerst eine Weißabgleich-Kalibrierung der Kamera vorgesehen sein. Der Weißabgleich kann vorzusehen sein, um die Kamera 7 auf die Farbtemperatur des Lichtes am Aufnahmeort zu sensibilisieren. Die digitale Aufzeichnung von Bildern erlauben eine den Lichtverhältnissen angepasste Farbtemperatur. Ein Kameraprozessor kann dann die korrekte Farbtemperatur ermitteln.

In verschiedenen Ausführungsformen kann das beschriebene System zum computergestutzten Ermitteln von Haarinformation das anhand verschiedener Ausführungsformen beschriebene Verfahren zum computergestützten Ermitteln von Haarinformation ausführen, beispielsweise das Verfahren wie in Zusammenhang mit den Figuren 3-1 und 3-2 beschrieben.

Weiter vorteilhafte Ausgestaltungen der Verfahren ergeben sich aus der Beschreibung der Kalibriervorrichtung und des Systems und umgekehrt.

## Patentansprüche

1. Verfahren zum Kalibrieren einer Kamera, aufweisend:
• Aufnehmen eines digitalen Bildes (2) von mindestens einer Kalibrierinformation auf mindestens einer Faser einer Mehrzahl von Fasern aus Naturhaar oder naturhaarähnlichen Fasern mittels einer Kamera (7);
• Ermitteln der mindestens einen Faser im digitalen Bild mittels mindestens eines Markers (3, 5a, 5b, 5c);
• Ermitteln einer Mehrzahl von Farbwerten einer Mehrzahl von Referenzfarben (4a, 4b, 4c) als die Kalibrierinformation auf der mindestens einen Faser im digitalen Bild, wobei jeder Referenzfarbe ein Referenzfarbwert zugeordnet ist; und
• Zuordnen des jeweiligen ermittelten Farbwertes der Mehrzahl von ermittelten Farbwerten zu dem jeweiligen zugeordneten Referenzfarbwert der Mehrzahl von Referenzfarbwerten,
• wobei die mindestens eine Faser zwei Marker (3) aufweist, die einen nicht natürlichen Farbverlauf aufweisen und wobei ein Bereich zwischen den zwei Markern (3) vorgesehen ist, der Information hinsichtlich dreier Referenzfarben (4a, 4b, 4c) aufweist.

2. Verfahren gemäß Anspruch 1,
wobei das Ermitteln der mindestens einen Faser im digitalen Bild mittels mindestens eines Markers ein Ermitteln eines nicht natürlichen Farbverlaufs innerhalb der mindestens einen Faser und/oder eines charakteristischen Farbtons auf der mindestens einen Faser im digitalen Bild aufweist.

3. Verfahren gemäß einem der Ansprüche 1 oder 2,
wobei bei dem Ermitteln der mindestens einen Faser im digitalen Bild und/oder bei dem Ermitteln einer Mehrzahl von Farbwerten einer Mehrzahl von Referenzfarben Marker mit Farbwerten verwendet werden, die in einem Farbspektrum in einem Wellenlängenbereich von 10 Nanometer bis 1 Millimeter, vorzugsweise in einem Wellenlängenbereich von 380 Nanometer bis 780 Nanometer liegen, oder vorzugsweise in einem Wellenlängenbereich von 10 Nanometer bis 380 Nanometer oder in einem Wellenlängenbereich von 780 Nanometer bis 1 Millimeter liegen.

4. Verfahren gemäß einem der Ansprüche 1 bis 3,
wobei das Ermitteln des mindestens einen Markers durch mindestens ein optisches Verfahren realisiert wird.

5. Verfahren gemäß einem der Ansprüche 1 bis 4,
wobei das Zuordnen der in dem digitalen Bild ermittelten Mehrzahl von Farbwerten zu den Referenzfarbwerten ein Speichern der ermittelten Farbwerte zu den zugehörigen Referenzfarbwerten in einem Speicher aufweist.

6. Verfahren gemäß einem der Ansprüche 1 bis 5,
wobei die Referenzfarben im digitalen Bild basierend auf einer unterschiedlichen Farbvalenz und/oder einer unterschiedlichen spektralen Zusammensetzung und/oder einer unterschiedlichen Helligkeit ermittelt werden.

7. Verfahren gemäß einem der Ansprüche 1 bis 6,
wobei das Aufnehmen eines digitalen Bildes von mindestens einer Kalibrierinformation ein Aufnehmen einer semipermanent am Haar (6) eines Nutzers gekoppelten Faser in Form einer Haarverlängerung oder in Form eines Einflechtens der Faser in das Haar des Nutzers aufweist.

8. Verfahren gemäß einem der Ansprüche 1 bis 6,
wobei das Aufnehmen eines digitalen Bildes von mindestens einer Kalibrierinformation ein Aufnehmen einer mittels Implantation in die Kopfhaut des Nutzers permanent am Haar eines Nutzers gekoppelten Faser aufweist.

9. Verfahren gemäß einem der Ansprüche 1 bis 8,
wobei die Kalibrierinformation, vorzugsweise die Referenzfarben, derart vorgesehen werden, dass sie auf einen Ausgangsfarbton des Haars des Nutzers abgestimmt werden.

10. Verfahren zum computergestützten Ermitteln von Haarfarbinformation, aufweisend:
• Durchführen eines Verfahrens zum Kalibrieren einer Kamera (7) gemäß einem der Ansprüche 1 bis 9,
ferner aufweisend:
• Ermitteln eines Haarfarbwertes von Haar (6) eines Nutzers im digitalen Bild;
• Ermitteln desjenigen ermittelten Farbwertes, der einen Farbunterschied zu dem ermittelten Haarfarbwert derart aufweist, dass er ein vorgegebenes Unterschiedskriterium erfüllt;
• Bereitstellen des dem ermittelten Farbwert zugeordneten Referenzfarbwertes als aktueller Haarfarbwert;
• Ermitteln eines Zielhaarfarbwertes;
• Ermitteln eines Datensatzes (11a) basierend auf dem aktuellen Haarfarbwert und dem Zielhaarfarbwert;
• Bereitstellen mindestens einer für den Nutzer relevanten Information basierend auf dem Datensatz.

11. Verfahren nach Anspruch 10,
wobei die Nutzer relevante Information eine Produktempfehlung, vorzugsweise hinsichtlich eines Haarfärbemittels, eine Haarbehandlungsempfehlung, vorzugsweise hinsichtlich einer Einwirkzeit eines Haarfärbemittels, eines Mischverhältnisses von Farbe und Entwickler oder einer Pflegebehandlung, oder eine Farbempfehlung, vorzugsweise hinsichtlich eines dekorativen Kosmetikums oder eines Schmuck- oder Kleidungsstücks, umfasst.

12. Verfahren gemäß einem der Ansprüche 10 oder 11,
wobei das Ermitteln eines Datensatzes basierend auf dem aktuellen Haarfarbwert und dem Zielhaarfarbwert mittels der Kamera durchgeführt wird oder das Ermitteln eines Datensatzes basierend auf dem aktuellen Haarfarbwert und dem Zielhaarfarbwert mittels einer externen Plattform (11) realisiert wird.

13. Kalibriermittel (1) zum Kalibrieren einer Kamera (7), aufweisend:
• mindestens eine Faser von einer Mehrzahl von Naturhaarfasern oder von naturhaarähnlichen Fasern;
• eine Mehrzahl von unterschiedlichen Referenzfarbstrukturen, die auf der mindestens einen Faser aufgebracht sind; und
• mindestens einen Marker zum Ermitteln der mindestens einen Faser in einem digitalen Bild (2),
• wobei die mindestens eine Faser zwei Marker (3) aufweist, die einen nicht natürlichen Farbverlauf aufweisen und wobei ein Bereich zwischen den zwei Markern (3) vorgesehen ist, der Information hinsichtlich dreier Referenzfarben (4a, 4b, 4c) aufweist.

14. System zum computergestützten Ermitteln von Haarfarbinformation, aufweisend:
• das Kalibriermittel (1) gemäß Anspruch 13;
• eine Kamera (7) zum Aufnehmen eines digitalen Bildes des Kalibriermittels und/oder von Haar (6) eines Nutzers;
• einen Prozessor (8) zum Ermitteln des Kalibriermittels und/oder von Farbwerten in dem digitalen Bild;
• eine Eingabevorrichtung (9) zum Auswählen eines Zielhaarfarbwertes; und
• eine Ausgabevorrichtung (10) zum Bereitstellen von Information hinsichtlich mindestens eines Haarfarbwertes.

## Claims

1. A method for calibrating a camera,
comprising:
• recording a digital image (2) of at least one piece of calibration information on at least one fiber of a plurality of fibers from natural hair or fibers resembling natural hair by means of a camera (7);
• identifying the at least one fiber in the digital image by means of at least one marker (3, 5a, 5b, 5c);
• identifying a plurality of color values of a plurality of reference colors (4a, 4b, 4c) as the calibration information on the at least one fiber in the digital image, wherein a reference color value is assigned to each reference color; and
• assigning the relevant identified color value of the plurality of identified color values to the relevant assigned reference color value of the plurality of reference color values,
• wherein the at least one fiber has two markers (3) which have a non-natural color profile and wherein a region between the two markers (3) is provided, which comprises information regarding three reference colors (4a, 4b, 4c).

2. The method according to claim 1,
wherein identifying the at least one fiber in the digital image by means of at least one marker comprises identifying a non-natural color profile within the at least one fiber and/or a characteristic shade on the at least one fiber in the digital image.

3. The method according to one of claims 1 or 2,
wherein, when identifying the at least one fiber in the digital image and/or when identifying a plurality of color values of a plurality of reference colors, markers with color values are used which have a color spectrum in a wavelength range from 10 nanometers to 1 millimeter, preferably in a wavelength range from 380 nanometers to 780 nanometers, or preferably in a wavelength range from 10 nanometers to 380 nanometers or in a wavelength range from 780 nanometers to 1 millimeter.

4. The method according to one of claims 1 to 3,
wherein the at least one marker is identified by at least one optical method.

5. The method according to one of claims 1 to 4,
wherein assigning the plurality of color values identified in the digital image to the reference color values comprises storing the identified color values for the assigned reference color values in a memory.

6. The method according to one of claims 1 to 5,
wherein the reference colors in the digital image are identified based on a different color stimulus specification and/or a different spectral composition and/or a different brightness.

7. The method according to one of claims 1 to 6,
wherein recording a digital image of at least one piece of calibration information comprises recording a fiber which is semi-permanently coupled to the hair (6) of a user and is in the form of a hair extension or in the form of a weave of the fiber in the hair of the user.

8. The method according to one of claims 1 to 6,
wherein recording a digital image of at least one piece of calibration information comprises recording a fiber which is permanently coupled to the hair of a user by means of implantation in the scalp of the user.

9. The method according to one of claims 1 to 8,
wherein the calibration information, preferably the reference colors, is provided such that it is matched to a starting shade of the hair of the user.

10. A method for identifying hair color information using a computer, comprising:
• carrying out a method for calibrating a camera (7) according to one of claims 1 to 9,
further comprising:
• identifying a hair color value of hair (6) of a user in the digital image;
• identifying the identified color value which has a difference in color to the identified hair color value such that it meets a predetermined difference criterion;
• providing the reference color value assigned to the identified color value as the current hair color value;
• identifying a target hair color value;
• identifying a dataset (11a) based on the current hair color value and the target hair color value;
• providing at least one piece of information which is relevant to the user based on the dataset.

11. The method according to claim 10,
wherein the user-relevant information comprises a product recommendation, preferably regarding a hair dye, a hair treatment recommendation, preferably regarding an exposure time of a hair dye, a mixing ratio of color and developer or a care treatment, or a color recommendation, preferably regarding a decorative cosmetic or a jewelry or clothing item.

12. The method according to one of claims 10 or 11,
wherein a dataset is identified based on the current hair color value and the target hair color value by means of the camera or a dataset is identified based on the current hair color value and the target hair color value by means of an external platform (11).

13. A calibration device (1) for calibrating a camera (7), comprising:
• at least one fiber of a plurality of natural hair fibers or fibers resembling natural hair;
• a plurality of different reference color structures attached to the at least one fiber; and
• at least one marker for identifying the at least one fiber in a digital image (2),
• wherein the at least one fiber has two markers (3) which have a non-natural color profile and wherein a region between the two markers (3) is provided, which comprises information regarding three reference colors (4a, 4b, 4c).

14. A system for identifying hair color information using a computer, comprising:
• the calibration device (1) according to claim 13;
• a camera (7) for recording a digital image of the calibration device and/or hair (6) of a user;
• a processor (8) for identifying the calibration device and/or color values in the digital image;
• an input device (9) for selecting a target hair color value; and
• an output device (10) for providing information regarding at least one hair color value.

## Revendications

1. Procédé pour l'étalonnage d'une caméra,
présentant :
• la prise d'une image numérique (2) d'au moins une information d'étalonnage sur au moins une fibre d'une pluralité de fibres de cheveux naturels ou de fibres similaires à des cheveux naturels au moyen d'une caméra (7) ;
• la détermination de l'au moins une fibre dans l'image numérique au moyen d'au moins un marqueur (3, 5a, 5b, 5c) ;
• la détermination d'une pluralité de valeurs de couleur d'une pluralité de couleurs de référence (4a, 4b, 4c) en tant qu'information d'étalonnage sur l'au moins une fibre dans l'image numérique, une valeur de couleur de référence étant associée à chaque couleur de référence ; et
• l'attribution de la valeur de couleur déterminée respective de la pluralité de valeurs de couleur déterminées à la valeur de couleur de référence associée respective de la pluralité de valeurs de couleur de référence,
• l'au moins une fibre présentant deux marqueurs (3) qui présentent un dégradé de couleurs non naturel et une zone étant prévue entre les deux marqueurs (3), laquelle présente des informations concernant trois couleurs de référence (4a, 4b, 4c).

2. Procédé selon la revendication 1,
dans lequel la détermination de l'au moins une fibre dans l'image numérique au moyen de l'au moins un marqueur présente une détermination d'un dégradé de couleurs non naturel dans l'au moins une fibre et/ou d'une teinte caractéristique sur l'au moins une fibre dans l'image numérique.

3. Procédé selon l'une des revendications 1 ou 2,
dans lequel, lors de la détermination de l'au moins une fibre dans l'image numérique et/ou lors de la détermination d'une pluralité de valeurs de couleur, une pluralité de marqueurs de couleurs de référence comprenant des valeurs de couleur sont utilisés, lesquels se situent dans un spectre de couleurs dans une plage de longueurs d'onde de 10 nanomètres à 1 millimètre, de préférence dans une plage de longueurs d'onde de 380 nanomètres à 780 nanomètres, ou se situent de préférence dans une plage de longueurs d'onde de 10 nanomètres à 380 nanomètres ou dans une plage de longueurs d'onde de 780 nanomètres à 1 millimètre.

4. Procédé selon l'une des revendications 1 à 3,
dans lequel la détermination de l'au moins un marqueur est effectuée au moyen d'au moins un procédé optique.

5. Procédé selon l'une des revendications 1 à 4,
dans lequel l'attribution de la pluralité de valeurs de couleur déterminées dans l'image numérique aux valeurs de couleur de référence présente un enregistrement des valeurs de couleur déterminées avec les valeurs de couleurs de référence associées dans une mémoire.

6. Procédé selon l'une des revendications 1 à 5,
dans lequel les couleurs de référence dans l'image numérique sont déterminées sur la base d'une valence chromatique différente et/ou d'une composition spectrale différente et/ou d'une luminosité différente.

7. Procédé selon l'une des revendications 1 à 6,
dans lequel la prise d'une image numérique d'au moins une information d'étalonnage présente une prise d'une fibre couplée de manière semi-permanente sur les cheveux (6) d'un utilisateur sous la forme d'une extension capillaire ou sous la forme d'un tressage de la fibre dans les cheveux de l'utilisateur.

8. Procédé selon l'une des revendications 1 à 6,
dans lequel la prise d'une image numérique d'au moins une information d'étalonnage présente une prise d'une fibre couplée de manière permanente aux cheveux d'un utilisateur au moyen d'une implantation dans le cuir chevelu de l'utilisateur.

9. Procédé selon l'une des revendications 1 à 8,
dans lequel l'information d'étalonnage, de préférence les couleurs de référence, sont prévues de façon qu'elles sont adaptées à une teinte initiale des cheveux de l'utilisateur.

10. Procédé pour la détermination assistée par ordinateur d'informations de couleurs de cheveux, présentant :
• l'exécution d'un procédé pour l'étalonnage d'une caméra (7) selon l'une des revendications 1 à 9,
présentant en outre :
• la détermination d'une valeur de couleur de cheveux des cheveux (6) d'un utilisateur dans l'image numérique ;
• la détermination de la valeur de couleur déterminée, laquelle présente une différence de couleur par rapport à la valeur de couleur de cheveux déterminée de façon qu'elle satisfait un critère de distinction prédéfini ;
• la fourniture de la valeur de couleur de référence associée à la valeur de couleur déterminée en tant que valeur de couleur de cheveux actuelle ;
• la détermination d'une valeur de couleur de cheveux cible ;
• la détermination d'un ensemble de données (1 1a) sur la base de la valeur de couleur de cheveux actuelle et de la valeur de couleur de cheveux cible ;
• la fourniture d'au moins une information pertinente pour l'utilisateur sur la base de l'ensemble de données.

11. Procédé selon la revendication 10,
dans lequel l'information pertinente pour l'utilisateur comprend une recommandation de produit, de préférence concernant un agent de coloration capillaire, une recommandation de traitement capillaire, de préférence concernant un temps de pose d'un agent de coloration capillaire, un rapport de mélange de couleur et de révélateur ou un traitement de soins, ou une recommandation de couleur, de préférence concernant un produit cosmétique décoratif ou un bijou ou des vêtements.

12. Procédé selon l'une des revendications 10 ou 11,
dans lequel la détermination d'un ensemble de données sur la base de la valeur de couleur de cheveux actuelle et de la valeur de couleur de cheveux cible est effectuée au moyen de la caméra ou la détermination d'un ensemble de données sur la base de la valeur de couleur de cheveux actuelle et de la valeur de couleur de cheveux cible est réalisée au moyen d'une plateforme externe (11).

13. Moyen d'étalonnage (1) pour l'étalonnage d'une caméra (7), présentant :
• au moins une fibre d'une pluralité de fibres de cheveux naturels ou de fibres similaires à des cheveux naturels ;
• une pluralité de structures de couleurs de référence différentes, lesquelles sont appliquées sur l'au moins une fibre ; et
• au moins un marqueur pour la détermination de l'au moins une fibre dans une image numérique (2),
• l'au moins une fibre présentant deux marqueurs (3) qui présentent un dégradé de couleurs non naturel et une zone étant prévue entre les deux marqueurs (3), laquelle présente des informations concernant trois couleurs de référence (4a, 4b, 4c).

14. Système pour la détermination assistée par ordinateur d'informations de couleurs de cheveux, présentant :
• le moyen d'étalonnage (1) selon la revendication 13 ;
• une caméra (7) pour la prise d'une image numérique du moyen d'étalonnage et/ou de cheveux (6) d'un utilisateur ;
• un processeur (8) pour la détermination du moyen d'étalonnage et/ou de valeurs de couleurs dans l'image numérique ;
• un dispositif d'entrée (9) pour la sélection d'une valeur de couleur de cheveux cible ; et
• un dispositif de sortie (10) pour la fourniture d'informations concernant au moins une valeur de couleur de cheveux.
